# EUROPÄISCHE PATENTSCHRIFT

(11) **EP 4 126 669 B1**
(45) Veröffentlichungstag und Bekanntmachung des Hinweises auf die Patenterteilung: **27.11.2024**
(21) Anmeldenummer: 21717333.5
(22) Anmeldetag: 26.03.2021
(51) Int. Cl.: B64D 11/00, B60R 5/00, B61D 37/00, B64C 1/06, B64F 5/00

(54) **FAHRZEUGBEREICH MIT GEPÄCKFACH UND DECKENPANEEL OBERHALB DES GEPÄCKFACHES, UND VERFAHREN ZUM EINBAU UND AUSBAU EINES DECKENPANEELS OBERHALB EINES GEPÄCKFACHES**
VEHICLE REGION WITH LUGGAGE COMPARTMENT AND COVER PANEL ABOVE THE LUGGAGE COMPARTMENT, AND METHOD FOR ASSEMBLING AND DISASSEMBLING A COVER PANEL ABOVE THE LUGGAGE COMPARTMENT
RÉGION DE VÉHICULE DOTÉE D'UN COMPARTIMENT À BAGAGES ET D'UN PANNEAU DE RECOUVREMENT AU-DESSUS DU COMPARTIMENT À BAGAGES, ET PROCÉDÉ DE MONTAGE ET DE DÉMONTAGE D'UN PANNEAU DE RECOUVREMENT AU-DESSUS DU COMPARTIMENT À BAGAGES

(30) Priorität: 02.04.2020 DE 102020109169
(43) Veröffentlichungstag der Anmeldung: 08.02.2023
(73) Patentinhaber: Airbus Operations GmbH, 21129 Hamburg (DE)
(72) Erfinder: WENG, Alexander, 21129 Hamburg (DE); HELFRICH, Felix, 21129 Hamburg (DE); WARNER, Holger, 21129 Hamburg (DE); KIRCHER, Benedikt, 21129 Hamburg (DE); ROESTEL, Johanna, 21129 Hamburg (DE); KOLCAK, Efe, 21129 Hamburg (DE)
(74) Vertreter: Schornack, Oliver
(86) Internationale Anmeldenummer: PCT/EP2021/057945
(87) Internationale Veröffentlichungsnummer: WO 2021/198073

(56) Entgegenhaltungen:
- US-A- 4 490 883
- US-A1- 2011 024 058
- US-A1- 2017 283 058

## Beschreibung

Die vorliegende Erfindung betrifft einen Fahrzeugbereich mit einem Gepäckfach mit vergrößertem Stauraum unterhalb eines überlappend angeordneten Deckenpaneels, sowie Verfahren zum Einbau und Ausbau eines Deckenpaneels oberhalb zweier vergrößerter Gepäckfächer. Insbesondere betrifft die vorliegende Erfindung einen Fahrzeugbereich im Dachabschnitt der Primärstruktur eines Fahrzeugs mit zwei Gepäckfächern und einem Deckenpaneel, wobei das Deckenpaneel durch einen Gepäckraum mindestens eines der Gepäckfächer in seiner Bewegung begrenzt ist, nicht jedoch durch eine Gepäckfachdecke des Gepäckfachs. Ferner betrifft die vorliegende Erfindung ein Verfahren zum Einbau und Ausbau eines Deckenpaneels, wobei das Deckenpaneel zumindest teilweise durch einen Gepäckraum eines der Gepäckfächer, an dem die Gepäckfachklappe abgenommen wurde, geführt wird.

In Verkehrsmitteln, insbesondere in Flugzeugen, Bussen oder Zügen, werden oft oberhalb von Passagiersitzen Überkopfgepäckfächer installiert, in denen Handgepäck verstaut werden kann. Zudem ist oberhalb solcher Gepäckfächer ein Deckenpaneel angeordnet, um eine ansprechende sichtbare Oberfläche in der Passagierkabine zu installieren. Zur Vermeidung von Einblicken hinter das Gepäckfach oder neben das Deckenpaneel, ist das Deckenpaneel auf oder an dem Gepäckfach oder auf/an zwei Gepäckfächern auf zwei gegenüberliegenden Seiten des Deckenpaneels befestigt.

In letzter Zeit bringen Passagiere zunehmend mehr Gepäck in die Passagierkabine, aber auch Fahrzeugbetreiber wünschen, mehr Gepäck in der Passagierkabine unterzubringen (um ein zeitaufwendiges Be- und Entladen des Frachtraums zu verkürzen oder zu vermeiden). Um diesen Anforderungen gerecht zu werden, müssen mehr oder größere Gepäckfächer in der Passagierkabine untergebracht werden. Dies führt jedoch regelmäßig zu einer Neugestaltung der Passagierkabine. Sollen nun gebrauchte Fahrzeuge umgerüstet werden, ist dies kostenintensiv, da nicht nur größere Gepäckfächer installiert werden müssen, sondern auch Wand- und/oder Deckenpaneele ausgetauscht werden müssen.

Sollen zudem Überkopfgepäckfächer (beispielsweise oberhalb von Passagiersitzen angeordnet) installiert werden, die größer sind als bisher, ist auch weniger Ein- und Ausbauraum für Deckenpaneele im Deckenbereich der Passagierkabine vorhanden. Insbesondere bei mehreren Überkopfgepäckfächern, die beispielsweise rechts und links von einem Passagiergang angeordnet sind, ist der Abstand zwischen den beiden Gepäckfächern geringer, und somit der Ein- und Ausbauraum für die Deckenpaneele kleiner.

US4490883 A offenbart Befestigungselemente, die in einem Flugzeug installiert sind, um die äußeren Enden von zwei Deckenplatten zu stützen und sie mit den Oberseiten von zwei Gepäckfächern 6 zu verbinden.

US2017283058 A1 offenbart ein nachrüstbares Gepäckfachscharnier das ein Verlängerungselement umfasst, das das Lagervolumen des Gepäckfachs um mindestens 5 Prozent oder 10 Prozent vergrößert und dadurch die Lagerung größerer Handgepäckstücke ermöglicht. Der erforderliche Zugang zu den Deckenpaneelen während der Wartungsarbeiten wird durch die schwenkbare Befestigung der Scharniere an einer an der Decke des Gepäckfachs angebrachten Schwenkhalterung gewährleistet. Auf diese Weise können die Scharniere und die Tür leicht nach unten geschwenkt werden, um bei Wartungsarbeiten vollen Zugang zu den Deckenpaneelen zu erhalten.

Der Erfindung liegt die Aufgabe zugrunde, einen Fahrzeugbereich mit Gepäckfächern und einem Deckenpaneel sowie Einbau- und Ausbauverfahren bereitzustellen, die mehr Stauraum in einer Passagierkabine in kostengünstiger und einfacher Weise ermöglichen.

Diese Aufgabe wird durch einen Fahrzeugbereich mit den Merkmalen gemäß Anspruch 1, ein Verfahren zum Einbau eines Deckenpaneels mit den Merkmalen gemäß Anspruch 7 und ein Verfahren zum Ausbau eines Deckenpaneels mit den Merkmalen gemäß Anspruch 10 gelöst. Bevorzugte Ausführungsformen sind in den abhängigen Ansprüchen definiert.

Gemäß einem ersten Aspekt zum besseren Verständnis der vorliegenden Offenbarung umfasst ein Fahrzeugbereich einen Dachabschnitt einer Primärstruktur des Fahrzeugs, ein erstes Gepäckfach, das unterhalb des Dachabschnitts angeordnet ist und einen ersten Zwischenraum zwischen der Primärstruktur und dem ersten Gepäckfach begrenzt, und ein zweites Gepäckfach, das dem ersten Gepäckfach gegenüberliegenden und unterhalb des Dachabschnitts angeordnet ist. Das erste Gepäckfach und das zweite Gepäckfach können Überkopfgepäckfächer sein, welche oberhalb von Passagiersitzen in dem Fahrzeug angeordnet sind. Gegenüberliegend angeordnet ist hier in Querrichtung des Fahrzeugs zu sehen. Die beiden Gepäckfächer, der Dachabschnitt der Primärstruktur und der Zwischenraum sind somit alle in der gleichen Querschnittsebene des Fahrzeugs angeordnet.

In der vorliegenden Offenbarung ist eine Längsrichtung eines Fahrzeugs die Richtung, in der sich das Fahrzeug für gewöhnlich bewegt (beispielsweise X-Achse). Entsprechend ist eine Querrichtung senkrecht zur Längsrichtung angeordnet und verläuft in einem Querschnitt des Fahrzeugs (beispielsweise Y-Achse). Eine Z-Achse entspricht einer Vertikalen, die senkrecht zur Längsrichtung und senkrecht zur Querrichtung steht. In der vorliegenden Offenbarung werden, insbesondere in Bezug auf ein Gepäckfach oder ein Deckenpaneel, Begriffe wie "oben", "unten", "Ober-", "Boden" und Ähnliches verwendet. Diese beziehen sich auf den eingebauten Zustand des Gepäckfachs bzw. des Deckenpaneels im Fahrzeug und entlang der Z-Achse. Ferner zeigt eine Vorderkante (beispielsweise einer Gepäckfachdecke oder eines Gepäckfachbodens) zum Beispiel zu einem (sich in Richtung der X-Achse erstreckenden) Passagiergang und somit zu einem Passagier, der in dem Gang vor dem Gepäckfach steht und parallel zur Y-Achse (Querrichtung des Fahrzeugs) blickt. Ferner umfasst der Fahrzeugbereich ein Deckenpaneel, das unterhalb des Dachabschnitts angeordnet ist und eine erste Seite, die oberhalb des ersten Gepäckfachs angeordnet ist, und eine zweite Seite, die der ersten Seite gegenüberliegt und oberhalb des zweiten Gepäckfachs angeordnet ist, umfasst. Mit anderen Worten überlappt das Deckenpaneel jedes der Gepäckfächer auf entsprechenden Seiten des Deckenpaneels. Bei dem Deckenpaneel handelt es sich um eine Innenverkleidung der Passagierkabine. Dies dient insbesondere der Herstellung eines optisch ansprechenden Eindrucks im oberen Bereich des Gepäckfachs, da durch das überlappende Deckenpaneel Blicke in einen Bereich der Primärstruktur des Fahrzeugs verdeckt werden. Die erste und zweite Seite des Deckenpaneels ist in dem ersten Zwischenraum bzw. einem zweiten Zwischenraum (zwischen Primärstruktur des Fahrzeugs und oberhalb des zweiten Gepäckfachs) angeordnet sein.

Dabei umfasst der erste Zwischenraum einen Endpunkt, der von dem zweiten Gepäckfach am weitesten beabstandet und an den die erste Seite des Deckenpaneels bewegbar ist. Diese Beabstandung ist ebenfalls in Querrichtung des Fahrzeugs betrachtet. Der Endpunkt befindet sich somit weiter von einer Fahrzeugmitte entfernt als, beispielsweise, die Gepäckfachklappe des ersten Gepäckfachs oder die erste Seite des Deckenpaneels im eingebauten Zustand. Selbstverständlich muss es sich bei dem Endpunkt nicht um einen einzelnen Punkt handeln. Vielmehr kann es sich auch um eine Linie oder einen Bereich handeln, die/der beispielsweise in Längsrichtung des Fahrzeugs (X-Achse) verläuft und im Querschnitt des Fahrzeugs einen Endpunkt definiert.

Dass die erste Seite des Deckenpaneels an den Endpunkt bewegbar ist, bedeutet einen gewissen Spielraum für das Deckenpaneel in dem ersten Zwischenraum. An dem Endpunkt stößt die erste Seite des Deckenpaneels, das beispielsweise in Querrichtung des Fahrzeugs von einer Einbauposition des Deckenpaneels in Richtung des Endpunkts bewegt wird, an ein Hindernis, sodass das Deckenpaneel die Bewegung nicht fortsetzen kann. Das Hindernis kann zum Beispiel ein Teil der Primärstruktur des Fahrzeugs, ein Teil des ersten Gepäckfachs und/oder eine beliebige Komponente des Fahrzeugs, die in den Zwischenraum installiert ist, sein. So kann bei freiem Zwischenraum der Endpunkt (der Endbereich) ein Bereich sein, an dem ein rückseitiges Ende einer Gepäckfachdecke des ersten Gepäckfachs der Primärstruktur am nächsten liegt.

Ferner umfasst das zweite Gepäckfach eine lösbare Gepäckfachklappe und eine Gepäckfachdecke, die einen Teil eines Gepäckraums des Gepäckfachs nach oben hin begrenzt.

Der Gepäckraum kann in Querrichtung des Fahrzeugs größer sein als eine Erstreckung der Gepäckfachdecke in diese Richtung, sodass die Gepäckfachdecke nur den Teil des Gepäckraums nach oben hin begrenzt. Insbesondere kann der Gepäckraum in Richtung Fahrzeugmitte, d.h. in Richtung des ersten Gepäckfachs, größer sein als die Gepäckfachdecke. Der Gepäckraum steht vollständig zum Beladen des Gepäckfachs mit Gepäck und Fracht zur Verfügung. Beispielsweise wird der Gepäckraum noch durch weitere Elemente des Gepäckfachs definiert, die den Gepäckraum begrenzen und darin verstaute Gegenstände vor einem Herausfallen aus dem Gepäckraum schützen, wie zum Beispiel eine Seitenwand oder die Gepäckfachklappe.

Zudem ist kann eine Breite des Deckenpaneels, die sich von der ersten Seite zu der zweiten Seite des Deckenpaneels erstreckt, größer als eine Distanz zwischen dem Endpunkt und einer Oberkante des Gepäckraums des zweiten Gepäckfachs, wobei die Oberkante dem Dachabschnitt und dem ersten Gepäckfach zugewandt ist. Die Oberkante des Gepäcksraums verläuft in Längsrichtung des Gepäckfachs, welche im eingebauten Zustand des Gepäckfachs im Fahrzeug für gewöhnlich mit der Längsrichtung des Fahrzeugs zusammenfällt oder nahezu parallel dazu verläuft.

Dabei ist die Gepäckfachdecke so ausgestaltet, dass eine dem ersten Gepäckfach zugewandte Vorderkante der Gepäckfachdecke eine Distanz zu dem Endpunkt aufweist, die größer als oder gleich der Breite des Deckenpaneels ist. Mit anderen Worten lässt sich das Deckenpaneel, wenn es mit seiner ersten Seite den Endpunkt erreicht oder in diesem Bereich anliegt, mit seiner zweiten Seite (gerade noch) vor der Vorderkante der Gepäckfachdecke bewegen.

Das Deckenpaneel ist im eingebauten Zustand oberhalb der Gepäckfachdecke des ersten und zweiten Gepäckfachs angeordnet, sodass das Deckenpaneel mit der entsprechenden Gepäckfachdecke überlappt. Wie eingangs erwähnt, dient dies insbesondere der optisch ansprechenden Verkleidung des Fahrzeugs aus Sicht der Passagierkabine. Selbst bei geöffneter Gepäckfachklappe ist inzwischen Gepäckfachklappe und Gepäckfachdecke weiterhin das Deckenpaneel zu sehen.

Der durch die besondere Lage der Vorderkante der Gepäckfachdecke des zweiten Gepäckfachs zur Verfügung stehende Raum ist bei dem hier offenbarten Gepäckfach größer als bei gewöhnlichen Gepäckfächern, sodass trotz Überlappung des Deckenpaneels mit der Gepäckfachdecke das Deckenpaneel einfach und leicht entnommen werden kann. Dieser Ausbau des Deckenpaneels ist insbesondere bei Wartungsarbeiten und ähnlichem notwendig, um an Leitungen, Lampen, etc. zu gelangen, die hinter oder seitlich von dem Deckenpaneel angeordnet sind. Ein andernfalls notwendiger Ausbau des gesamten Gepäckfachs kann dabei entfallen, sodass die Wartungsarbeiten kostengünstiger sind.

Zum Beispiel kann das Deckenpaneel aus seinen Halterungen gelöst werden, und soweit in Richtung Endpunkt verschoben werden, dass es auf seiner zweiten Seite nicht mehr mit der Gepäckfachdecke des zweiten Gepäckfachs überlappt. Nun kann diese Seite des Deckenpaneels abgesenkt werden, wobei sich die Seite des Deckenpaneels durch einen Gepäckraum des Gepäckfachs bewegt, bis das Deckenpaneel unterhalb des Gepäckfachs frei ist. Anschließend kann das Deckenpaneel vollständig entfernt werden.

Ferner ist es möglich, in bestehenden Fahrzeugen kleinere Gepäckfächer zu entfernen und größere Gepäckfächer einzubauen. Ein Überlappungsbereich (insbesondere die Überlappungstiefe in Querrichtung des Fahrzeugs betrachtet) des bisher verwendeten Deckenpaneels mit dem Gepäckraum des größeren Gepäckfachs würde es unmöglich machen, das Deckenpaneel auszubauen. Durch die "Verkürzung" der Gepäckfachdecke gemäß der vorliegenden Offenbarung können jedoch größere Gepäckfächer in Fahrzeugen nachgerüstet werden, ohne dass ein neues, kleineres Deckenpaneel installiert werden muss. Durch die Wiederverwendung (Beibehaltung) des bestehenden Deckenpaneels kann ein Umbau eines Fahrzeugs zu mehr Stauraum kostengünstig durchgeführt werden.

In einer Implementierungsvariante kann das zweite Gepäckfach eine Befestigungseinrichtung umfassen, die dazu eingerichtet ist, die Gepäckfachklappe drehbar an dem Gepäckfach, beispielsweise an der Gepäckfachdecke, zu befestigen, wobei eine Oberkante der Gepäckfachklappe von einer der Gepäckfachklappe zugewandten Vorderkante der Gepäckfachdecke mit einem ersten Abstand beabstandet ist.

Mit anderen Worten ist zwischen der Oberkante der Gepäckfachklappe und der Vorderkante der Gepäckfachdecke ein Spalt. Dieser Spalt kann beispielsweise durch die Befestigungseinrichtung der Gepäckfachklappe erzielt werden, wobei die Befestigungseinrichtung in den Spalt hineinragt oder den Spalt überspannt.

Durch diese Anordnung ist es möglich, die Gepäckfachklappe zu entfernen und den von dem Spalt definierten Raum beim Ausbau des Deckenpaneels zu nutzen. Der erste Abstand, also die Breite des Spalts, kann wenige Zentimeter betragen. Insbesondere ist der erste Abstand in Abhängigkeit der Breite des Deckenpaneels, der Distanz zwischen der Vorderkante der Gepäckfachdecke des zweiten Gepäckfachs und dem Endpunkt sowie der Größe des Gepäckraums (und insbesondere die Lage der Oberkante des Gepäckraums des zweiten Gepäckfachs) gewählt.

In einer Implementierungsvariante kann die Befestigungseinrichtung zwei Abschnitte umfassen, die mit einem Schnellverschluss verbunden sind. Durch den Schnellverschluss lässt sich die Befestigungseinrichtung einfach und schnell in zwei Teile zerlegen, und die Gepäckfachklappe kann schnell entfernt werden. Beispielsweise kann zwischen einem Gelenk der Befestigungseinrichtung, mit dem die Gepäckfachklappe drehbar an der Gepäckfachdecke befestigt wird, und einem Abschnitt der Befestigungseinrichtung, der an der Gepäckfachdecke befestigt wird, eine lösbare Verbindung vorgesehen sein. Die lösbare Verbindung kann durch eine Rastlasche, eine Schraube, oder ähnliches schnell zu lösendes Element implementiert sein. Die lösbare Verbindung ist vorteilhafterweise so angeordnet, dass ein an der Gepäckfachdecke stehenbleibender Abschnitt der Befestigungseinrichtung vollständig an der Gepäckfachdecke befestigt ist, also nicht in den Spalt zwischen Vorderkante der Gepäckfachdecke und Oberkante der Gepäckfachklappe ragt.

In einer anderen Implementierungsvariante kann das zweite Gepäckfach eine Zwischenwand umfassen, die den Gepäckraum unterteilt und zu der Gepäckfachdecke und der Gepäckfachklappe jeweils im Wesentlichen senkrecht angeordnet ist. Beispielweise kann die Zwischenwand im eingebauten Zustand des Gepäckfachs in Querrichtung des Fahrzeugs angeordnet sein (also in einer durch die Y- und Z-Achse gebildeten Ebene). Die Zwischenwand kann eine der Gepäckfachklappe zugewandte konkave Vorderkante aufweisen. Die konkave Vorderkante der Zwischenwand hat ihren größten Abstand zur Gepäckfachklappe in einem mittleren Bereich der Vorderkante, während das obere und untere Ende der Vorderkante der Zwischenwand am nächsten zu der Gepäckfachklappe angeordnet ist.

Die konkav geformte Vorderkante der Zwischenwand kann dabei so geformt sein, dass eine Seite (Seitenkante) eines auszubauenden oder einzubauenden Deckenpaneels entlang der Vorderkante bewegt werden kann. Beispielsweise kann die konkav geformte Vorderkante ein Kreissegment oder einen Abschnitt einer Ellipse darstellen, die der Bewegung des Deckenpaneels beim Ausbau oder Einbau entspricht.

Alternativ kann die Zwischenwand auch eine im Wesentlichen geradlinig geformte Vorderkante aufweisen. Gegebenenfalls wird dadurch ein Spalt zwischen Vorderkante der Zwischenwand und Gepäckfachklappe zumindest abschnittsweise größer, andererseits ist die Zwischenwand so jedoch einfacher herzustellen und behindert dennoch nicht das Deckenpaneel beim Ausbau oder Einbau.

In einer weiteren Variante kann die Zwischenwand so ausgestaltet sein, dass das obere Ende der Vorderkante der Zwischenwand nicht in den Spalt zwischen Vorderkante der Gepäckfachdecke und Oberkante der Gepäckfachklappe ragt. Mit anderen Worten ist das obere Ende der Vorderkante der Zwischenwand unterhalb der Gepäckfachdecke angeordnet oder fällt mit der Vorderkante der Gepäckfachdecke zusammen. Dadurch behindert die Zwischenwand nicht die Bewegung des Deckenpaneels durch den Gepäckraum des Gepäckfachs.

In noch einer anderen Implementierungsvariante kann die Zwischenwand lösbar an dem Gepäckfach befestigt sein. Dadurch kann die Zwischenwand vollständig aus dem Gepäckraum des Gepäckfachs entnommen werden, wodurch dieser auch vollständig für eine Bewegung des Deckenpaneels zur Verfügung steht.

In einer weiteren Implementierungsvariante kann das Gepäckfach ferner eine Seitenwand umfassen, die den Gepäckraum in Längsrichtung seitlich begrenzt und eine der Gepäckfachklappe zugewandte Vorderkante, die eine einem Querschnitt der Gepäckfachklappe entsprechende Form hat, aufweist. Im eingebauten Zustand des Gepäckfachs im Fahrzeug ist die Seitenwand entlang der Längsrichtung des Fahrzeugs (X-Achse) vorne oder hinten am Gepäckfach angeordnet. Die Form der Vorderkante erlaubt einen Abschluss des Gepäckraums durch die Gepäckfachklappe, welche beispielsweise an der Vorderkante der Seitenwand anliegen kann, wenn die Gepäckfachklappe in einer Schliessstellung ist.

Durch die entsprechend dem Querschnitt der Gepäckfachklappe geformte Seitenwand wird verhindert, dass Gegenstände aus einem geschlossenen Gepäckfach herausfallen können und dass Personen oder Gegenstände in einem Spalt zwischen Seitenwand und Gepäckfachklappe eingeklemmt werden. Die den Gepäckraum abschließende Seitenwand behindert dennoch nicht den Ausbau oder Einbau eines Deckenpaneels. Zum einen kann das Deckenpaneel in Längsrichtung des Fahrzeugs (X-Achse) eine Erstreckung (Länge) aufweisen, die einer Erstreckung (Länge) des Gepäckfachs entspricht. Das Deckenpaneel kann beim Ausbau oder Einbau nun ein wenig um die Z-Achse gedreht werden, sodass sich eine Ecke des Deckenpaneels durch den Gepäckraum des Gepäckfachs entlang einer Seitenwand des Gepäckfachs bewegen lässt. Die in Längsrichtung betrachtet andere Ecke des Deckenpaneels befindet sich dabei außerhalb des Gepäckraums und vor der anderen Seitenwand des Gepäckfachs.

Alternativ kann die Seitenwand eine Vorderkante aufweisen, die konkav oder im Wesentlichen geradlinig geformt ist. Dadurch lässt sich die Seitenwand einfacher und kostengünstiger herstellen. Um einen Schlitz oder eine Öffnung zwischen Vorderkante der Seitenwand und Gepäckfachklappe zu vermeiden, kann die Gepäckfachklappe einen Abschnitt aufweisen, der zu der Vorderkante der Seitenwand hinzeigt. Dieser flanschartige Abschnitt erlaubt ein vollständiges Verschließen des Gepäcksraums, während der Flansch mit der Gepäckfachklappe entfernt wird und somit den Ausbauraum bzw. Einbauraum für das Deckenpaneel freigibt.

Alternativ oder zusätzlich kann die Seitenwand und/oder die Zwischenwand aus mindestens zwei Abschnitten bestehen. Dabei kann mindestens ein der Gepäckfachklappe zugewandter Abschnitt lösbar an dem Gepäckfach befestigt sein. Beispielsweise kann/können der/die lösbare/n Abschnitt/e in entsprechende Haltevorrichtungen eingeschoben und herausgezogen werden. Nach Entfernen eines lösbaren Abschnitts, kann ein Deckenpaneel durch den Gepäckraum des Gepäckfachs bewegt werden, ohne dass eine Seitenwand oder Zwischenwand die Bewegung des Deckenpaneels behindert. Dadurch lassen sich auch Deckenpaneele ausbauen oder einbauen, die eine größere Erstreckung in Längsrichtung des Fahrzeugs (d.h. Länge des Deckenpaneels) aufweisen als das Gepäckfach.

In einer Implementierungsvariante kann die Vorderkante der Gepäckfachdecke des zweiten Gepäckfachs in zumindest einem Abschnitt zurückspringen und dort von der Oberkante der Gepäckfachklappe mit einem zweiten Abstand beabstandet sein, wobei der zweite Abstand größer ist als der erste Abstand. Mit anderen Worten bildet die Vorderkante der Gepäckfachdecke mit der Oberkante der Gepäckfachklappe einen Spalt, der unterschiedliche Breiten aufweist. Dieser Spalt liegt, bei eingebautem Deckenpaneel, in einem seitlichen Endbereich des Deckenpaneels. Mit anderen Worten ist eine Seite oder ein seitliches Ende des Deckenpaneels in etwa oberhalb des Spalts angeordnet. Selbstverständlich kann die Seite oder das seitliche Ende des Deckenpaneels auch oberhalb der Gepäckfachdecke des Gepäckfachs angeordnet sein, sodass der Spalt vollständig von dem Deckenpaneel überspannt ist.

Oft ist in diesem seitlichen Bereich des Deckenpaneels eine Beleuchtung vorgesehen, beispielsweise eine indirekte Beleuchtung, die hinter dem Deckenpaneel oder zwischen Deckenpaneel und Oberseite der Gepäckfachdecke versteckt ist. Da nun ein größeres Gepäckfach eingebaut sein kann, würde die Gepäckfachdecke des Gepäckfachs diese Beleuchtung verdecken, wodurch ein neues Lichtkonzept für die Passagierkabine notwendig würde. Durch den Spalt zwischen Vorderkante der Gepäckfachdecke und Oberkante der Gepäckfachklappe kann Licht in die Passagierkabine strahlen. Der Spalt ist auch in einem geöffneten Zustand der Gepäckfachklappe offen und ermöglicht somit eine Beleuchtung der Passagierkabine mit einer bestehenden Beleuchtungseinrichtung. Dies ermöglicht die Weiterverwendung bisheriger Beleuchtungen, auch wenn eine Passagierkabine mit größeren Gepäckfächern ausgestattet wird. Dadurch werden Umbaukosten für die Passagierkabine ebenfalls geringgehalten.

In einer anderen Implementierungsvariante kann das zweite Gepäckfach ferner mindestens eine Haltevorrichtung umfassen, die auf einer Oberseite der Gepäckfachdecke angeordnet ist und dazu eingerichtet ist, ein Deckenpaneel zu befestigen. Eine einfache Variante einer Haltevorrichtung ist ein auf der Oberseite der Gepäckfachdecke angeordnetes horizontales Bauteil mit einer Öffnung, durch die ein entsprechender Stift oder ähnliches stiftförmiges Element des Deckenpaneels eingesteckt und daran befestigt werden kann. Dabei kann der Stift des Deckenpaneels ein oder mehrere Rastelemente aufweisen, welche/s eine sichere Befestigung des Deckenpaneels an der Haltevorrichtung gewährleistet.

In einer weiteren Implementierungsvariante kann ein Gepäckfachboden des zweiten Gepäckfachs, der den Gepäckraum des zweiten Gepäckfachs nach unten hin begrenzt, auch eine Vorderkante aufweisen. Dabei kann der Gepäckfachboden so ausgestaltet sein, dass die dem ersten Gepäckfach zugewandte Vorderkante des Gepäckfachbodens eine Distanz zu dem Endpunkt aufweist, die größer als oder gleich der Breite des Deckenpaneels ist. Mit anderen Worten kann auch der Gepäckfachboden in Abhängigkeit der Breite des Deckenpaneels dimensioniert und gestaltet werden.

Dabei kann eine Distanz zwischen dem Endpunkt in dem ersten Zwischenraum und einer Unterkante des Gepäckraums des zweiten Gepäckfachs, die dem ersten Gepäckfach zugewandt und dem Dachabschnitt abgewandt ist, kleiner sein als die Breite des Deckenpaneels. Der Gepäckraum eignet sich hier ebenfalls zur Aufnahme größerer Gepäckstücke oder größerer Fracht als bei herkömmlichen kleineren Gepäckfächern, wobei große Deckenpaneele, beispielsweise für herkömmliche kleinere Gepäckfächer dimensioniert, aufgrund der Lage der Vorderkante des Gepäckfachbodens weiterhin eingebaut und ausgebaut werden können.

Sämtliche Implementierungsvarianten und Formen, die in Bezug auf das zweite Gepäckfach beschrieben sind, können ebenfalls für das erste Gepäckfach, insbesondere die Gepäckfachklappe und Gepäckfachdecke des ersten Gepäckfachs, implementiert und/oder umgesetzt werden.

Gemäß einem zweiten Aspekt zum besseren Verständnis der vorliegenden Offenbarung umfasst ein Verfahren zum Einbau eines Fahrzeugbereichs gemäß dem ersten Aspekt oder einer seiner Implementierungsvarianten in einem Fahrzeug folgende Schritte:
- Einbringen einer ersten Seite des Deckenpaneels in einen ersten Zwischenraum zwischen einer Primärstruktur des Fahrzeugs und einem ersten der Gepäckfächer;
- Anheben einer der ersten Seite gegenüberliegenden zweiten Seite des Deckenpaneels, wobei die zweite Seite des Deckenpaneels zumindest teilweise durch einen Gepäckraum eines zweiten der Gepäckfächer geführt wird und an einer Vorderkante einer Gepäckfachdecke des zweiten Gepäckfachs vorbeigeführt wird;
- Verschieben des Deckenpaneels mit seiner zweiten Seite in einen zweiten Zwischenraum zwischen der Primärstruktur des Fahrzeugs und dem zweiten Gepäckfach; und
- Befestigen der ersten Seite des Deckenpaneels an einer Haltevorrichtung auf einer Oberseite der Gepäckfachdecke des ersten Gepäckfachs und Befestigen der zweiten Seite des Deckenpaneels an einer Haltevorrichtung auf einer Oberseite der Gepäckfachdecke des zweiten Gepäckfachs.

Beispielsweise kann das Deckenpaneel oberhalb zweier Gepäckfächer eingebaut werden, wobei mindestens eines der beiden Gepäckfächer ein Gepäckfach gemäß der Beschreibung des Fahrzeugbereichs des ersten Aspekts ist. Die Zwischenräume zwischen Primärstruktur des Fahrzeugs und jeweiligem Gepäckfach sind somit ebenfalls oberhalb der Gepäckfächer, beispielsweise oberhalb einer jeweiligen Gepäckfachdecke der Gepäckfächer angeordnet. Die beiden Gepäckfächer können in Querrichtung des Fahrzeugs (Y-Achse) betrachtet gegenüberliegend angeordnet sein. Beispielsweise können die Gepäckfachklappen beider Gepäckfächer aufeinander zuweisen.

Der Zwischenraum zwischen Primärstruktur des Fahrzeugs und dem ersten Gepäckfach ist für gewöhnlich für Leitungen und andere Versorgungselemente des Fahrzeugs vorgesehen. Üblicherweise ist aber oberhalb der Gepäckfächer ausreichend Platz, dass zumindest ein bestimmter Teil davon leer ist und den jeweiligen Zwischenraum bildet. Dabei muss der Zwischenraum nicht den vollständigen Platz zwischen Primärstruktur des Fahrzeugs und Gepäckfach (insbesondere Gepäckfachdecke des Gepäckfachs) umfassen. Vielmehr können in dem Zwischenraum auch Leitungen und andere Elemente angeordnet sein, da ein Deckenpaneel für gewöhnlich relativ flach ist, und somit auch zwischen Leitungen und Gepäckfachdecke des Gepäckfachs oder zwischen Leitungen und Primärstruktur des Fahrzeugs hineingeschoben (eingebracht) werden kann.

Das Anheben der zweiten Seite des Deckenpaneels erfolgt dabei in einem Zustand, in dem die erste Seite des Deckenpaneels in dem Zwischenraum angeordnet ist. Mit anderen Worten wird das Deckenpaneel um eine Achse gedreht, die in einem Bereich der ersten Seite des Deckenpaneels liegt und ferner oberhalb und im Wesentlichen parallel zu einer Oberseite der Gepäckfachdecke des ersten Gepäckfachs liegt (und sich beispielsweise in Längsrichtung des Fahrzeugs erstreckt). Durch die Bewegung des Deckenpaneels durch den Gepäckraum des Gepäckfachs (und auch durch die Ausnutzung des ersten Zwischenraums) lässt sich ein Deckenpaneel oberhalb der Gepäckfächer einbauen, das in einer Querrichtung des Fahrzeugs eine größere Erstreckung (Breite) aufweist, als der freie Raum zwischen den beiden Gepäckfächern. Mit anderen Worten kann ein Deckenpaneel oberhalb der Gepäckfächer eingebaut werden, das jedes der beiden Gepäckfächer überlappt, sodass der Zwischenraum zwischen Primärstruktur des Fahrzeugs und Gepäckfach nicht eingesehen werden kann. Dabei kann die Breite des Deckenpaneels größer sein als die Distanz zwischen dem Endpunkt in dem ersten Zwischenraum und der Oberkante des Gepäckraums des zweiten Gepäckfachs, sodass bei herkömmlich gestalteten Gepäckfächer das Deckenpaneel nicht ein- oder ausgebaut werden könnte. Ebenso können bestehende Deckenpaneele eingebaut werden, die für frühere kleinere Gepäckfächer dimensioniert sind, auch wenn nun größere Gepäckfächer in dem Fahrzeug vorhanden (nachgerüstet) sind.

In einer Implementierungsvariante kann das Verfahren ferner ein Einsetzen und Befestigen einer Gepäckfachklappe an dem ersten Gepäckfach und/oder ein Einsetzen und Befestigen einer Gepäckfachklappe an dem zweiten Gepäckfach umfassen. Mit anderen Worten war während des Einbaus des Deckenpaneels an mindestens einem der Gepäckfächer keine Gepäckfachklappe. Insbesondere an dem zweiten der Gepäckfächer kann auf eine Gepäckfachklappe verzichtet werden, wodurch das Deckenpaneel einfach durch den Gepäckraum des zweiten Gepäckfachs geführt werden kann.

Das Vorbeiführen der zweiten Seite des Deckenpaneels an der Vorderkante der Gepäckfachdecke des zweiten Gepäckfachs wird durch die Lage der Vorderkante der Gepäckfachdecke des zweiten Gepäckfachs in Bezug auf den Endpunkt im ersten Zwischenraum ermöglicht oder erleichtert. Der hierfür notwendige Spalt zwischen Oberkante der Gepäckfachklappe und Vorderkante der Gepäckfachdecke kann beispielsweise durch eine Befestigungseinrichtung der Gepäckfachklappe erzielt werden, wobei die Befestigungseinrichtung in den Spalt hineinragt.

Der durch diesen Spalt gewonnene Raum kann beim Einbau des Deckenpaneels ausgenutzt werden. Trotz des Spalts kann der Zwischenraum oberhalb des Gepäckfachs nicht eingesehen werden, da das Deckenpaneel (insbesondere bei früheren größeren Deckenpaneelen für kleinere Gepäckfächer) oberhalb des Spalts angeordnet ist und in den Zwischenraum hineinreicht.

Somit lassen sich auch bereits vorhandene Deckenpaneele für kleinere Gepäckfächer in ein Fahrzeug einbauen, in dem größere Gepäckfächer mit mehr Stauraum nachträglich eingebaut wurden. Durch die Wiederverwendung der vorhandenen Deckenpaneele können Umbaukosten reduziert werden.

In einer weiteren Implementierungsvariante kann das Verfahren, vor dem Einbringen der ersten Seite des Deckenpaneels, ferner ein Entnehmen einer Zwischenwand aus dem zweiten Gepäckfach und ein Einbringen der zweiten Seite des Deckenpaneels in den Gepäckraum des zweiten Gepäckfachs umfassen. Durch eine (vollständige) Entnahme der Zwischenwand aus dem zweiten Gepäckfach steht der Gepäckraum des zweiten Gepäckfachs (vollständig) zur Verfügung, um das Deckenpaneel einzubauen. Das Einbringen der ersten Seite des Deckenpaneels in den ersten Zwischenraum wird hierbei vereinfacht, dass sich das Deckenpaneel bereits näher an Dachabschnitt der Primärstruktur befindet.

Gemäß einem dritten Aspekt zum besseren Verständnis der vorliegenden Offenbarung umfasst ein Verfahren zum Ausbau eines Deckenpaneels eines Fahrzeugbereichs gemäß dem ersten Aspekt oder einer seiner Implementierungsvariante folgende Schritte:
- Entfernen einer Gepäckfachklappe von mindestens einem der beiden Gepäckfächer;
- Lösen je einer Befestigung des Deckenpaneels aus einer jeweiligen Haltevorrichtung auf den beiden Gepäckfächern;
- Verschieben des Deckenpaneels, wobei eine erste Seite des Deckenpaneels in einem ersten Zwischenraum zwischen einer Primärstruktur des Fahrzeugs und einem ersten der beiden Gepäckfächer angeordnet ist;
- Absenken einer der ersten Seite gegenüberliegenden zweiten Seite des Deckenpaneels, wobei die zweite Seite des Deckenpaneels an einer Vorderkante einer Gepäckfachdecke eines zweiten der beiden Gepäckfächer vorbeigeführt wird und zumindest teilweise durch einen Gepäckraum des zweiten Gepäckfachs geführt wird; und
- Entnehmen des Deckenpaneels aus dem ersten Zwischenraum.

Entsprechend dem Verfahren gemäß dem zweiten Aspekt kann auch ein größeres Deckenpaneel (beispielsweise früher verwendetes, für kleine Gepäckfächer dimensioniertes Deckenpaneel) in einem Fahrzeug verwendet werden. Der Ausbau unter Ausnutzung des Zwischenraums zwischen der Primärstruktur des Fahrzeugs und dem ersten Gepäckfach sowie das Führen des Deckenpaneels durch den Gepäckraum des zweiten Gepäckfachs ermöglicht schnelle Wartungsarbeiten, bei denen das Deckenpaneel entfernt werden muss. Durch das Entfernen einer Gepäckfachklappe mindestens eines der Gepäckfächer wird zusätzlicher Ausbauraum für das Deckenpaneel während des Ausbaus gewonnen, der sich vor der Vorderkante der Gepäckfachdecke des Gepäckfachs befindet.

In einer Implementierungsvariante kann das Absenken der zweiten Seite des Deckenpaneels ferner ein Vorbeiführen der zweiten Seite des Deckenpaneels an einer Vorderkante eines Gepäckfachbodens des zweiten Gepäckfachs, während sich die erste Seite des Deckenpaneels noch in dem ersten Zwischenraum befindet, umfassen. Mit anderen Worten beschreibt die zweite Seite des Deckenpaneels eine Bewegungsbahn, die von der Vorderkante der Gepäckfachdecke zu der Vorderkante des Gepäckfachbodens des zweiten Gepäckfachs führt.

In einer weiteren Implementierungsvariante kann das Vorbeiführen der zweiten Seite des Deckenpaneels an der Vorderkante des Gepäckfachbodens ein elastisches Verformen einer an der zweiten Seite des Deckenpaneels hervorstehenden Abschlusslippe umfassen. Dies ermöglicht die Bereitstellung eines größeren Gepäckfachs, also mit größerem Gepäckraum, da sich der Gepäckfachboden des Gepäckfachs weiter in das Fahrzeuginnere (zu einem Zentrum des Fahrzeugs hin) erstrecken kann. Die so entstehende größere Tiefe des Gepäckraums ermöglicht das Einbringen größerer Gepäckstücke oder Frachtstücke in den Gepäckraum. Entsprechend kann sich auch die Vorderkante der Gepäckfachdecke weiter in das Fahrzeuginnere erstrecken und der Spalt zwischen Vorderkante der Gepäckfachdecke und Oberkante der Gepäckfachklappe sowie die Distanz zwischen der Vorderkante der Gepäckfachdecke und den Endpunkt in dem ersten Zwischenraum kleiner ausfallen. Die elastische Abschlusslippe kann beispielsweise aus einem Kunststoff, Gummi oder ähnlichem hergestellt sein.

In einer anderen Implementierungsvariante kann vor dem Absenken der zweiten Seite des Deckenpaneels, ein Drehen des Deckenpaneels erfolgen, sodass beim Absenken der zweiten Seite des Deckenpaneels eine sich an der zweiten Seite befindliche Ecke des Deckenpaneels durch den Gepäckraum des zweiten Gepäckfachs bewegt. Das Drehen des Deckenpaneels kann beispielsweise um eine Vertikale (Z-Achse) erfolgen.

In noch einer weiteren Implementierungsvariante kann das zweite Gepäckfach eine Zwischenwand, die den Gepäckraum des zweiten Gepäckfachs unterteilt und eine der Gepäckfachklappe zugewandte Vorderkante hat, aufweisen. Die Vorderkante kann entsprechend der Variante aus dem ersten Aspekt geformt sein. Dadurch lässt sich die zweite Seite des Deckenpaneels beim Absenken entlang der Vorderkante der Zwischenwand bewegen.

In einer Implementierungsvariante kann das Verfahren auch zum Ausbau mehrerer Deckenpaneele verwendet werden. Nach dem Entnehmen des Deckenpaneels aus dem ersten Zwischenraum und somit nach dem Entfernen des gesamten Deckenpaneels aus dem Fahrzeugbereich kann ein benachbart angeordnetes Deckenpaneel aus seiner Befestigung gelöst werden und entlang einer Längsrichtung des Fahrzeugs (X-Achse) zu dem ersten und zweiten Gepäckfach bewegt werden. Dort können die Schritte des Verschiebens des Deckenpaneels, Absenkens einer zweiten Seite des Deckenpaneels und Entnehmens des Deckenpaneels aus dem ersten Zwischenraum entsprechend für das ehemals benachbarte Deckenpaneel durchgeführt werden. Dadurch lässt sich eine Vielzahl von Deckenpaneelen aus dem Fahrzeug entfernen, wobei lediglich an einem Gepäckfach die Gepäckfachklappe entfernt werden muss. Somit wird der Ausbau der Vielzahl von Deckenpaneelen einfach und schnell möglich, wodurch beispielsweise Wartungsarbeiten und Ähnliches, die den Ausbau der Deckenpaneele erfordern, kostengünstiger werden. Selbstverständlich kann der Einbau mehrerer Deckenpaneele in umgekehrter Reihenfolge erfolgen, wobei lediglich an einem Gepäckfach die Gepäckfachklappe entfernt werden muss, um eine Vielzahl von Deckenpaneele in den Fahrzeugbereich einzubauen.

In noch einer anderen Implementierungsvariante kann das zweite Gepäckfach eine Zwischenwand, die den Gepäckraum des zweiten Gepäckfachs unterteilt, aufweisen, wobei das Verfahren ferner die folgenden Schritte umfasst:
- Entnehmen der Zwischenwand aus dem zweiten Gepäckfach;
- beim Absenken der zweiten Seite des Deckenpaneels, Einführen der zweiten Seite des Deckenpaneels in den Gepäckraum des zweiten Gepäckfachs;
- Absenken der ersten Seite des Deckenpaneels, wobei die erste Seite des Deckenpaneels an einer Vorderkante einer Gepäckfachdecke des ersten Gepäckfachs vorbeigeführt wird und zumindest teilweise durch einen Gepäckraum des ersten Gepäckfachs geführt wird; und
- Herausführen der zweiten Seite des Deckenpaneels aus dem Gepäckraum des zweiten Gepäckfachs.

Durch das Entnehmen der Zwischenwand steht der gesamte Gepäckraum des zweiten Gepäckfachs zur Verfügung, wenn das Deckenpaneel abgesenkt wird. Dadurch kann die erste Seite des Deckenpaneels aus dem Zwischenraum entfernt werden, und vor der Vorderkante der Gepäckfachdecke des ersten Gepäckfachs vorbeigeführt werden. Mit anderen Worten erfolgt der Ausbau des Deckenpaneels nicht mit nur einer Drehbewegung um eine Achse in dem ersten Zwischenraum, sondern nach erfolgter Drehbewegung um die Achse in dem ersten Zwischenraum auch noch mit einer umgekehrten Drehung um eine Achse in einem Bereich der zweiten Seite des Deckenpaneels, die sich nun in dem Gepäckraum des zweiten Gepäckfachs befindet. Dadurch lassen sich große Deckenpaneele leicht und schnell ausbauen.

In einer Implementierungsvariante kann das Verfahren auch ein Entnehmen einer Seitenwand des zweiten Gepäckfachs umfassen. Dadurch können auch Deckenpaneele mit diesem Verfahren entfernt werden, die eine Erstreckung (Länge) in Längsrichtung des Fahrzeugs (X-Achse) haben, die mindestens der Erstreckung (Länge) eines Gepäckfachs entspricht.

Gemäß noch einem weiteren Aspekt zum besseren Verständnis der vorliegenden Offenbarung umfasst ein Fahrzeug einen Fahrzeugbereich gemäß dem ersten Aspekt.

Ferner können die oben beschriebenen Aspekte, Implementierungsvarianten und weiteren Ausgestaltungen selbstverständlich kombiniert werden, ohne dass dies explizit beschrieben ist. Jede der beschriebenen Implementierungsvariante ist somit optional zu jedem der Aspekte, Ausgestaltungen und Implementierungsvarianten oder bereits Kombinationen davon zu sehen. Die vorliegende Offenbarung ist somit nicht auf die einzelnen Implementierungsvarianten und Ausgestaltungen in der beschriebenen Reihenfolge oder einer bestimmten Kombination der Aspekte und Implementierungsvarianten beschränkt, soweit diese in den Anwendungsbereich der beigefügten Ansprüche fallen.

Bevorzugte Ausführungsbeispiele der Erfindung werden nun anhand der beigefügten schematischen Zeichnungen näher erläutert, wobei:
- Figur 1: schematisch eine Querschnittsansicht eines Fahrzeugbereichs mit herkömmlichen Gepäckfächern und Gepäckfächern gemäß der vorliegenden Offenbarung zeigt;
- Figur 2: schematisch eine perspektivische Ansicht eines Gepäckfachs zeigt;
- Figur 3: schematisch eine perspektivische Ansicht eines Gepäckfachs mit einer entfernten Gepäckfachklappe zeigt;
- Figur 4: schematisch eine perspektivische Ansicht eines Gepäckfachs mit entfernten Gepäckfachklappen zeigt;
- Figur 5: schematisch eine perspektivische Ansicht eines Gepäckfachs mit entfernten Gepäckfachklappen und entfernten Gepäckfachdecken zeigt;
- Figur 6: schematisch eine perspektivische Ansicht eines Gepäckfachs mit einer teilweise entfernten Gepäckfachdecke zeigt;
- Figur 7: schematisch perspektivische Ansichten einer Befestigungseinrichtung für eine Gepäckfachklappe zeigt;
- Figur 8: schematisch einen Querschnitt eines Fahrzeugbereichs mit einer Abfolge von Positionen beim Ausbau oder Einbau eines Deckenpaneels zeigt;
- Figur 9: schematisch eine perspektivische Ansicht eines Lichtspalts entlang einer Gepäckfachdecke eines Gepäckfachs zeigt;
- Figur 10: schematisch perspektivische Ansichten eines Gepäckfachs beim Ausbau von Abschnitten einer Seitenwand und einer Zwischenwand des Gepäckfachs zeigt;
- Figur 11: schematisch eine perspektivische Ansicht eines Gepäckfachs mit ausbaubarer Zwischenwand und einer Abfolge von Positionen beim Einbau oder Ausbau eines Deckenpaneels zeigt;
- Figur 12: ein Ablaufdiagramm für Verfahren zum Einbau eines Deckenpaneels zeigt; und
- Figur 13: ein Ablaufdiagramm für Verfahren zum Ausbau eines Deckenpaneels zeigt.

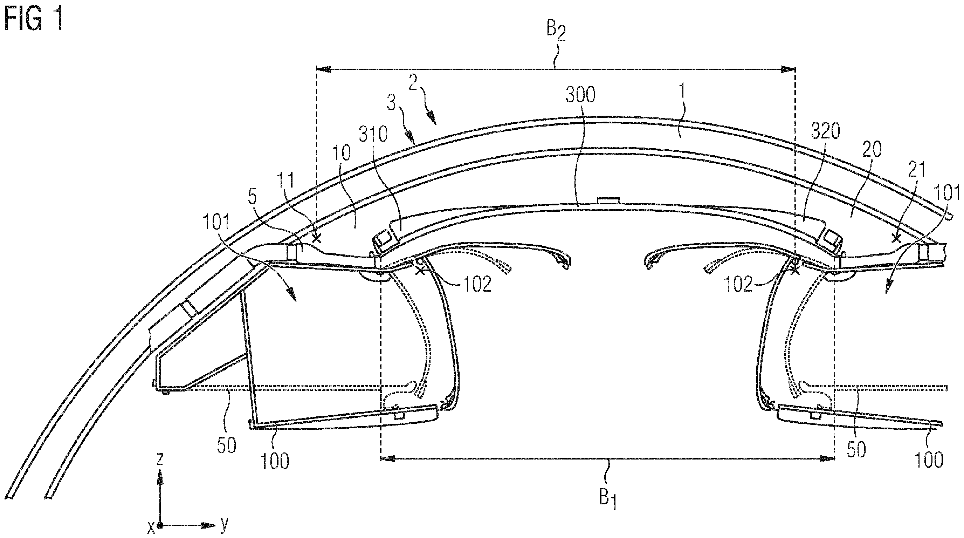

Figur 1 zeigt schematisch eine Querschnittsansicht eines Fahrzeugs 1, und insbesondere einen Fahrzeugbereich 2. Der Fahrzeugbereich 2 umfasst einen Dach Abschnitt 3 einer Primärstruktur 1 des Fahrzeugs. Ferner sind in Figur 1 herkömmliche Gepäckfächer 50 (gestrichelt dargestellt) und Gepäckfächern 100 gemäß der vorliegenden Offenbarung gezeigt. Die Gepäckfächer 100 gemäß der vorliegenden Offenbarung bieten einen größeren Stauraum oder Gepäckraum 101 im Vergleich zu den herkömmlichen Gepäckfächern 50. Hierfür ragen die Gepäckfächer 100 weiter in den Innenraum der Passagierkabine.

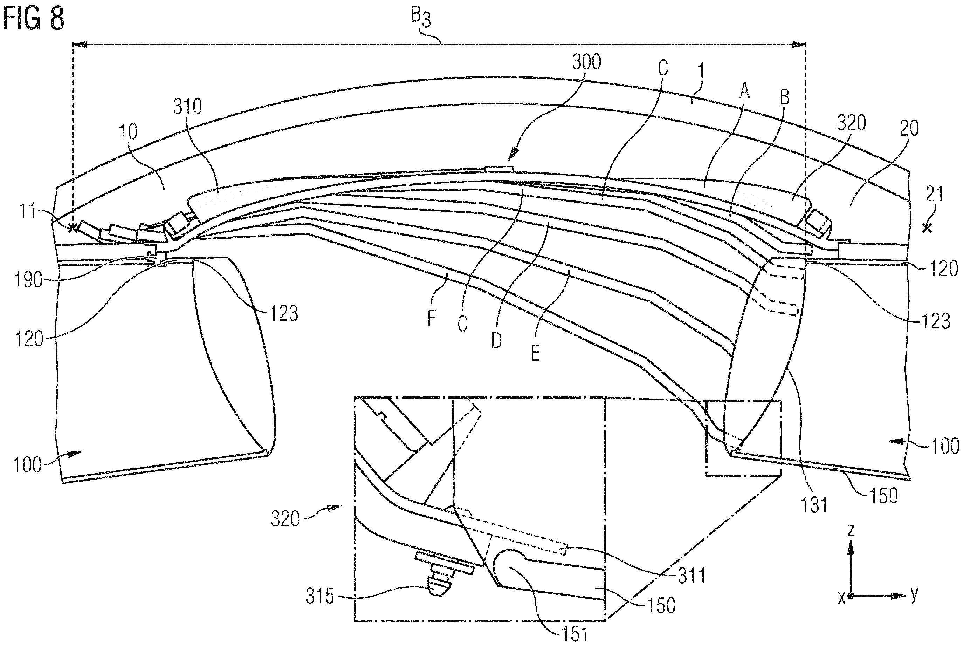

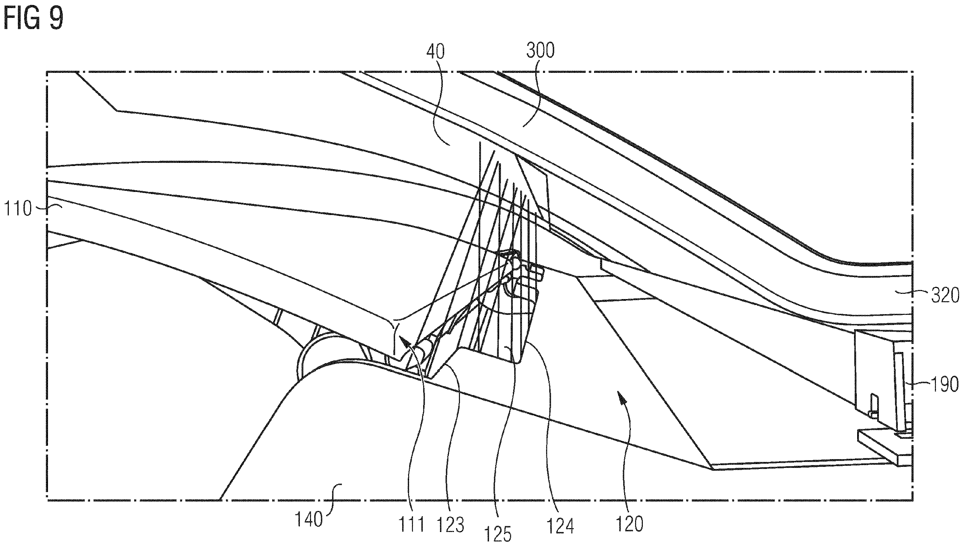

Oberhalb der Gepäckfächer 100 und unterhalb des Dachabschnitts 3 ist ein Deckenpaneel 300 angeordnet, welches beispielsweise auf einer Haltevorrichtung 190 (Figuren 8 und 9) auf einer Oberseite des Gepäckfachs 100 befestigt sein kann. Das Deckenpaneel 300 ist so dimensioniert, dass es den freien Raum zwischen den herkömmlichen Gepäckfächern 50 überspannt. Wird nun das herkömmliche Deckenpaneel 300 weiterhin mit den Gepäckfächern 100 gemäß der vorliegenden Offenbarung verwendet, ergibt sich ein viel größerer Überlappungsbereich in Querrichtung des Fahrzeugs (Y-Achse). Dies würde den Einbau oder Ausbau des Deckenpaneels 300 bei montierten Gepäckfächern 100 erschweren oder unmöglich machen. Um den Einbau oder Ausbau des Deckenpaneels 300 zu gewährleisten, ist mindestens eines der beiden Gepäckfächer 100 besonders ausgestaltet.

Zwar kann ein Deckenpaneel 300, wenn es aus der Haltevorrichtung 190 gelöst ist, in einen ersten Zwischenraum 10 zwischen der Primärstruktur 1 und dem ersten Gepäckfach 100 sowie in einen zweiten Zwischenraum 20 zwischen der Primärstruktur 1 und dem zweiten Gepäckfach 100 hinein- und herausbewegt werden. Jedoch ist die Breite B1 des Deckenpaneels 300 größer als eine Distanz B2 zwischen einem Endpunkt 11 in dem ersten Zwischenraum 10 und einer Oberkante 102 des Gepäckraums 101 des zweiten Gepäckfachs 100. Die Oberkante 102 des Gepäckraums 101 ist dem Dachabschnitt 3 und dem ersten Gepäckfach 100 zugewandt. Würden das erste und zweite Gepäckfach 100 genau so ausgestaltet sein, wie die herkömmliche Gepäckfächer 50 (nur größer) könnte das Deckenpaneel 300 nicht an der Oberkante 102 des Gepäckraums 101, und somit nicht an der Oberkante des Gepäckfachs 100, vorbeigeführt werden. Der Platz zwischen erstem Endpunkt und einer Oberkante des Gepäckfachs 100 wäre zu klein für die Breite B1 des Deckenpaneels 300.

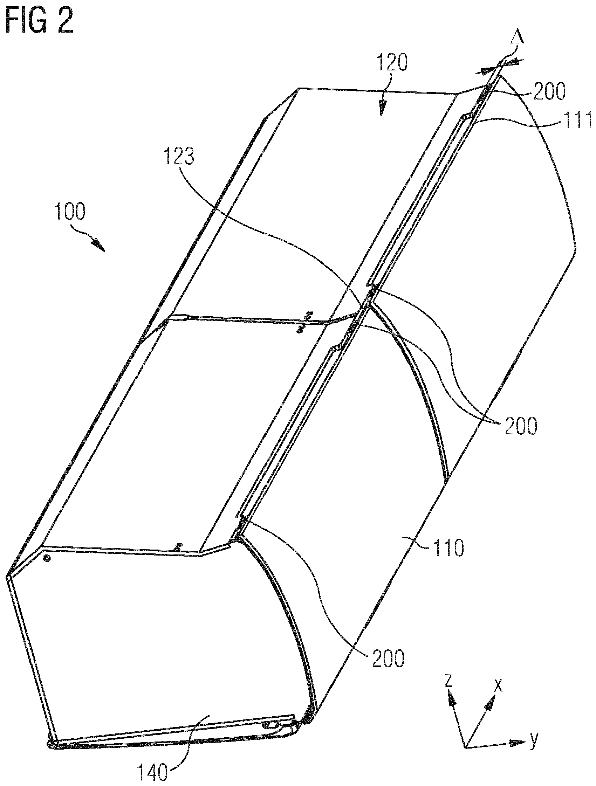

So zeigt Figur 2 schematisch eine perspektivische Ansicht eines Gepäckfachs 100 gemäß der vorliegenden Offenbarung, beispielsweise das zweite Gepäckfach 100, das in Figur 1 rechts dargestellt ist. Das Gepäckfach 100 weist mindestens eine Gepäckfachklappe 110, mindestens eine Gepäckfachdecke 120 und mindestens eine Seitenwand 140 auf. Die Gepäckfachklappe 110 ist dabei lösbar an dem Gepäckfach 100, beispielsweise an der Gepäckfachdecke 120 und/oder an einer Seitenwand 140, befestigt. Ferner ist die Gepäckfachklappe 110 durch eine Befestigungseinrichtung 200 drehbar an dem Gepäckfach 100, beispielsweise an der Gepäckfachdecke 120 befestigt.

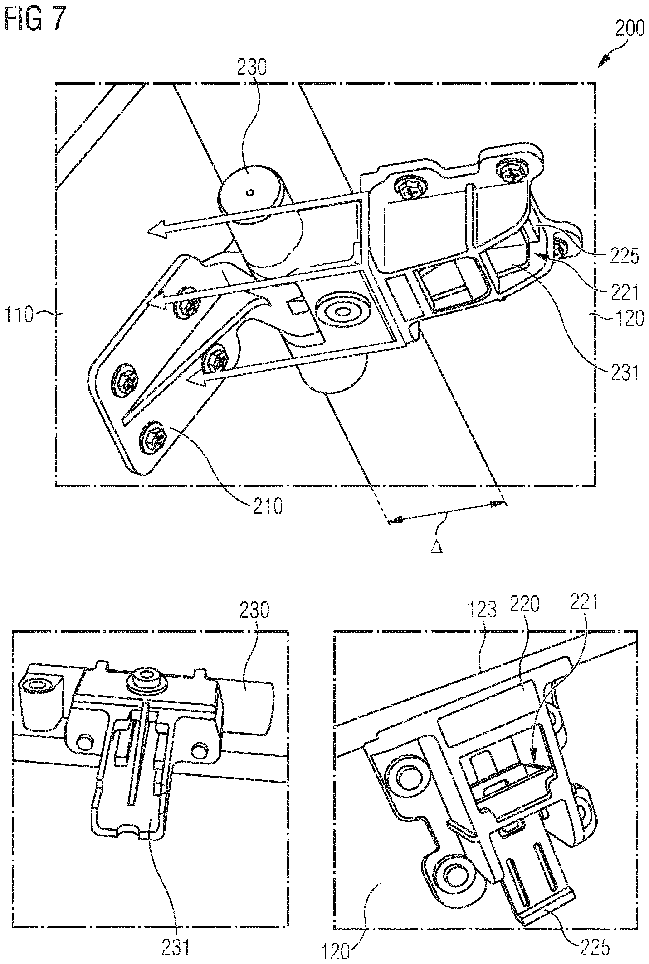

Eine Oberkante 111 der Gepäckfachklappe 110 ist im eingebauten Zustand der Gepäckfachklappe 110 von einer Vorderkante 123 der Gepäckfachdecke 120 mit einem ersten Abstand Δ beabstandet angeordnet. Durch diesen Abstand Δ lässt sich bei entfernter (gelöster) Gepäckfachklappe 110 zusätzlicher Raum zum Einbau oder Ausbau des Deckenpaneels 300 gewinnen. Die Oberkante 111 der Gepäckfachklappe 110 definiert in etwa die Oberkante 102 des Gepäckraums 101, da Gepäckstücke und Fracht im Inneren des Gepäckfachs 100 bis zu der Gepäckfachklappe 110 liegen können. Der erste Abstand Δ kann nun der Distanz B2 zwischen dem Endpunkt 11 und der Oberkante 102 des Gepäckraums 101 hinzugefügt werden. Dadurch ergibt sich eine weitere Distanz B3 (siehe Figur 8) zwischen der Vorderkante 123 der Gepäckfachdecke 120 und dem Endpunkt 11 in dem ersten Zwischenraum 10, die größer als oder gleich der Breite B1 des Deckenpaneels 300 ist. Dadurch wird der Ausbau und Einbau des Deckenpaneels 300 möglich. Der erste Abstand Δ lässt sich beispielsweise durch eine entsprechende Befestigungseinrichtung 200 (Figur 7) bewerkstelligen, die von einer Vorderkante 123 der Gepäckfachdecke 120 vorsteht.

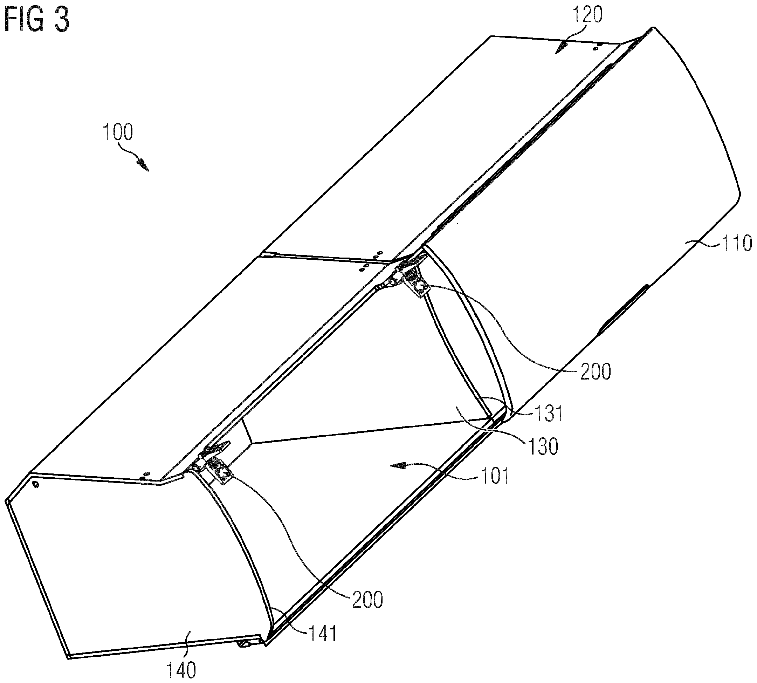

In den Figuren 3 bis 5 sind schematisch perspektivische Ansichten des Gepäckfachs 100 mit entfernter Gepäckfachklappe/n 110 und entfernter/n Gepäckfachdecke/en 120 gezeigt, um die Details des Gepäckfachs 100 zu verdeutlichen. In Figur 3 sind bei entfernter Gepäckfachklappe 110 zwei Befestigungseinrichtungen 200, hier in Form je eines Scharniers, sowohl für den geschlossenen Zustand der Gepäckfachklappe 110 als auch den geöffneten Zustand dargestellt. Ferner kann das Gepäckfach eine Zwischenwand 130 aufweisen, die einen Gepäckraum 101 in Längsrichtung (X-Achse) unterteilt. Die Zwischenwand 130 kann beispielsweise zu der Gepäckfachdecke 120 und der Gepäckfachklappe 110 jeweils im Wesentlichen senkrecht angeordnet sein. Im Wesentlichen senkrecht bedeutet hier in einem Winkel von 90° +/- 5°. Die Zwischenwand 130 kann eine der Gepäckfachklappe 110 zugewandte konkave Vorderkante 131 aufweisen. Konkav bedeutet hier, dass ein linsenförmiger Zwischenraum zwischen Gepäckfachklappe 110 und Vorderkante 131 der Zwischenwand 130 entsteht.

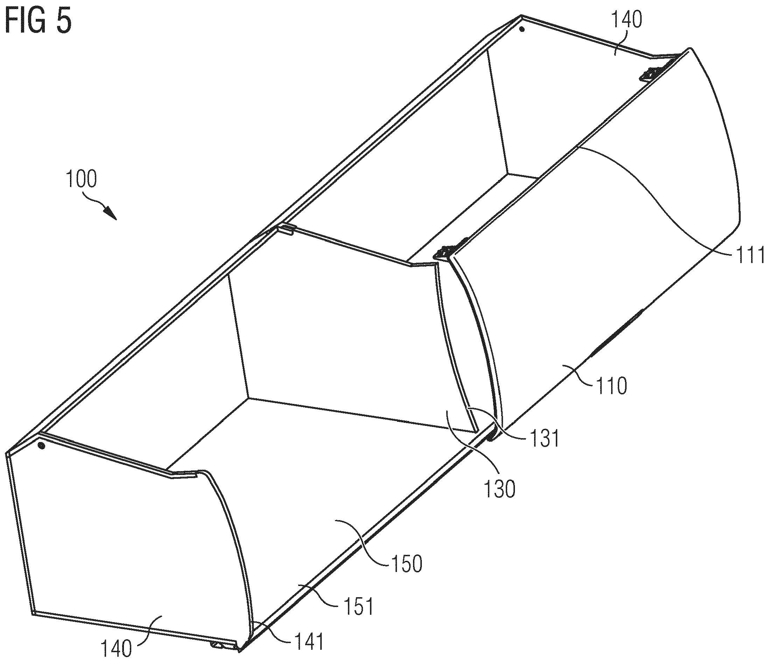

Die in den Figur 3 und 5 noch teilweise dargestellten Befestigungseinrichtungen 200 (Gelenke für die Gepäckfachklappe 110) sind nur zur Verdeutlichung gezeigt. Bei entfernter Gepäckfachklappe 110 wird die Befestigungseinrichtung vorzugsweise so weit entfernt, dass kein Abschnitt der Befestigungseinrichtung vor der Vorderkante 123 der Gepäckfachdecke 120 stehen bleibt.

Im Gegensatz zur Zwischenwand 130 können eine oder beide Seitenwände 140 eine Vorderkante 141 mit einer Form aufweisen, die einem Querschnitt der Gepäckfachklappe 110 entspricht. Dadurch kann die Gepäckfachklappe 110 mit der Vorderkante 141 der Seitenwand 140 abschließen und den Gepäckraum 101 sicher verschließen. Beispielsweise kann die Vorderkante 141 der Seitenwand oder der Seitenwände 140 eine konvexe Form oder alternativ eine im Wesentlichen gerade Form aufweisen.

Die Vorderkante 131 der Zwischenwand 130 kann an ihrem oberen Ende bündig mit der Vorderkante 123 der Gepäckfachdecke 120 angeordnet sein. Entsprechend kann ein unteres Ende der Vorderkante 131 der Zwischenwand 130 bündig mit einer Vorderkante 151 eines Gepäckfachbodens 150 des Gepäckfachs 100 angeordnet sein. Selbstverständlich kann das obere Ende und/oder das untere Ende der Vorderkante 131 der Zwischenwand 130 auch zurückversetzt sein. Mit anderen Worten kann die Vorderkante 131 der Zwischenwand 130 weiter im Gepäckraum 101 liegen, als die Vorderkante 123 der Gepäckfachdecke 120 und/oder die Vorderkante 151 des Gepäckfachbodens 150.

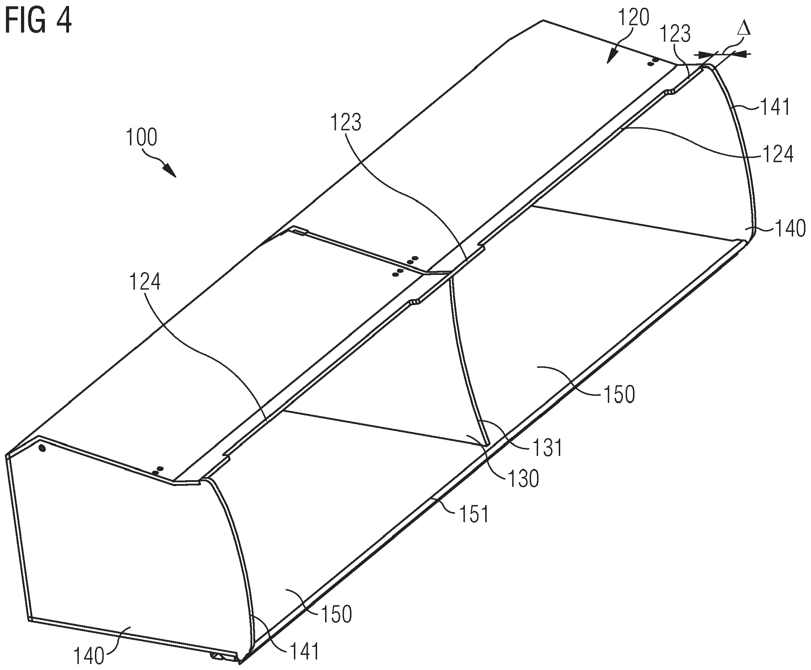

Bei vollständig entfernter Gepäckfachklappe 110 (siehe beispielsweise Figur 4) entsteht ein Arbeitsraum durch den Abstand Δ und den (beispielsweise konkaven) Verlauf der Vorderkante 131 der Zwischenwand 130, der zum Einbau oder Ausbau eines Deckenpaneels 300 zur Verfügung steht.

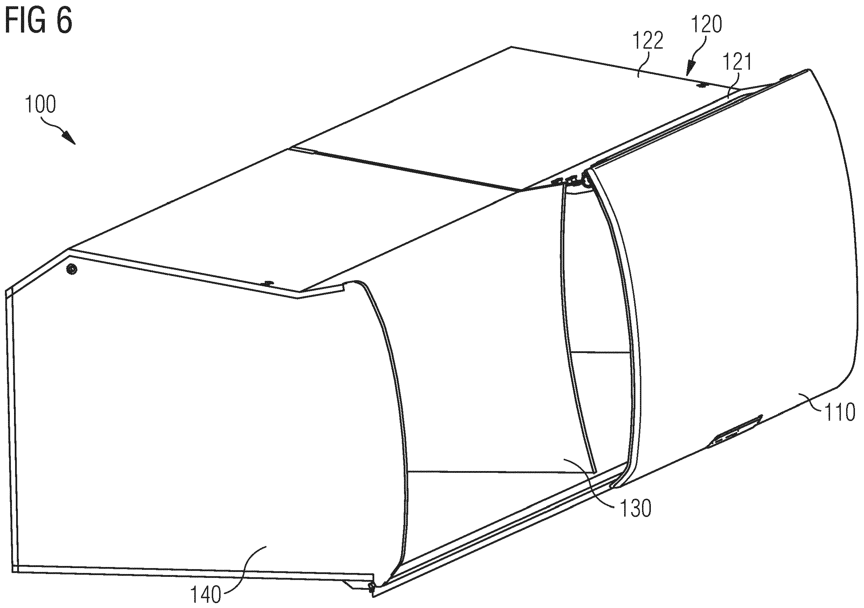

Zusätzlicher Arbeitsraum kann geschaffen werden, wenn auch die Gepäckfachdecke 120 einen ersten Abschnitt 121 aufweist, der von einem zweiten Abschnitt 122 gelöst und somit entfernt werden kann. Die Entfernung eines ersten Abschnitts 121 eines Teils der Gepäckfachdecke 120 ist in Figur 6 dargestellt. Beispielsweise kann die Befestigungseinrichtung 200 an dem ersten Abschnitt 121 der Gepäckfachdecke 120 befestigt sein oder darin integriert sein. Durch Entfernen des ersten Abschnitts 121 kann dabei auch die Befestigungseinrichtung 200 und optional gleichzeitig auch die an der Befestigungseinrichtung 200 (noch) befestigte Gepäckfachklappe 110 in einem Arbeitsschritt entfernt werden.

Figur 7 zeigt schematisch perspektivische Ansichten einer Befestigungseinrichtung 200 für eine Gepäckfachklappe 100. So kann die Befestigungseinrichtung 200 ein Gelenk 230 aufweisen, wodurch die Gepäckfachklappe 110 drehbar an dem Gepäckfach 100 befestigt werden kann. Beispielsweise kann, wie in Figur 7 dargestellt, ein Abschnitt 220 der Befestigungseinrichtung 200 an einer Gepäckfachdecke 120 des Gepäckfachs 100 befestigt werden. Daran schließt das Gelenk 230 an, an dem ein weiterer Abschnitt 210 der Befestigungseinrichtung 200 angeordnet ist. Der weitere Abschnitt 210 dient der Befestigung der Gepäckfachklappe 110 und ist relativ zu dem Abschnitt 220 über das Gelenk 230 drehbar.

Der Abschnitt 220 kann mit dem weiteren Abschnitt 210 und/oder dem Gelenk 230 mittels eines Schnellverschlusses 225 verbunden sein. Der Schnellverschluss 225 kann aus einem Steckelement 231, das an dem Gelenk 230 angeordnet ist, und einer korrespondierenden Öffnung 221 des Abschnitts 220 bestehen. Das Steckelement 231 kann in die Öffnung 221 des Abschnitts 220 eingeschoben werden und mit einer Rastlasche in einer Einrastposition in dem Abschnitt 220 fixiert werden. Durch Aufbiegen der Lasche 225 kann das Steckelement 231 aus der Verriegelung befreit werden und aus der Öffnung 221 entnommen werden. Der an der Gepäckfachdecke 120 verbleibende Abschnitt 220 ist dabei so dimensioniert, dass er vollständig von der Gepäckfachdecke 120 überdeckt ist. Mit anderen Worten ist der verbleibende Abschnitt 220 an der Gepäckfachdecke 120 vollständig angeordnet, steht also nicht über die Vorderkante 123 der Gepäckfachdecke 120 hervor.

Figur 8 zeigt schematisch einen Querschnitt eines Fahrzeugbereichs 2 mit zwei Gepäckfächern 100 und einer Abfolge von Positionen beim Ausbau oder Einbau eines Deckenpaneels 300. Mindestens eines der Gepäckfächer 100 kann beispielsweise eine Haltevorrichtung 190 aufweisen, die auf einer Oberseite der Gepäckfachdecke 120 des Gepäckfachs 100 angeordnet ist und dazu eingerichtet ist, ein Deckenpaneel 300 zu befestigen. Die Haltevorrichtung 190 kann eine formschlüssige und/oder kraftschlüssige Verbindungsmöglichkeit zum Befestigen des Deckenpaneels 300 aufweisen. Zum Beispiel kann das Deckenpaneel 300 ein stiftförmiges Halteelement 315 umfassen, das in eine entsprechende Öffnung in der Haltevorrichtung 190 eingesetzt werden kann und dort mittels Formschluss und/oder Kraftschluss gehalten werden kann. Wie in Figur 8 zu sehen ist, ist die Haltevorrichtung 190 von der Vorderkante 123 der Gepäckfachdecke 120 beabstandet, insbesondere zu einer Rückseite des Gepäckfachs 100 hin beabstandet. Dieser Abstand ergibt sich aus der Dimension des Deckenpaneels 300, welches für herkömmliche Gepäckfächer 50 (Figur 1) konzipiert war.

Zunächst wird der Ausbau eines solchen Deckenpaneels 300 beschrieben. Beispielsweise kann das Deckenpaneel 300 in der Position A angeordnet sein, in der ein Halteelement 315 auf einer ersten Seite 310 und ein weiteres Halteelement 315 auf einer der ersten Seite 310 gegenüberliegenden zweiten Seite 320 des Deckenpaneels 300 jeweils in einer Haltevorrichtung 190 fixiert ist. Durch Lösen aus der Haltevorrichtung 190, zum Beispiel durch Anheben des Deckenpaneels 300, kann das Deckenpaneel 300 in begrenztem Umfang bewegt werden. So kann die erste Seite 310 des Deckenpaneels 300 in einen ersten Zwischenraum 10 zwischen einer Primärstruktur 1 des Fahrzeugs 1 und einem ersten der Gepäckfächer 100 (in Figur 8 linksseitig) eingebracht werden. Das Deckenpaneel 300 kann in der Ansicht gemäß Figur 8 nach links verschoben werden.

Zum besseren Hantieren und Bewegen des Deckenpaneels 300 kann zunächst an dem zweiten Gepäckfach 100 (in Figur 8 rechts) eine Gepäckfachklappe 110 entfernt werden, die in Figur 8 bereits nicht mehr dargestellt ist. Dadurch ist das am weitesten in den Raum der Passagierkabine reichende Element im oberen Bereich des Gepäckfachs 100 die Vorderkante 123 der Gepäckfachdecke 120. In dem in Figur 8 gezeigten Beispiel ist es ausreichend, wenn die Gepäckfachklappe 110 des zweiten Gepäckfachs 100 entfernt wird.

Die erste Seite 310 des Deckenpaneels 300 kann dabei bis zu einem Endpunkt 11 in den ersten Zwischenraum 10 bewegt werden. Der Endpunkt 11 kann beispielsweise an der Primärstruktur 1 des Fahrzeugs und/oder an einer Oberseite der Gepäckfachdecke 120 des ersten Gepäckfachs 100 (in Figur 8 links) und/oder an einer Leitung 5 (siehe Figur 1), die in den ersten Zwischenraum 10 angeordnet ist, liegen. In dieser Position lässt sich das Deckenpaneel 300 nicht weiter (in Figur 8 nach links) bewegen.

Nun kann die zweite Seite 320 des Deckenpaneels 300 abgesenkt werden, wobei die zweite Seite 320 an einer Vorderkante 123 einer Gepäckfachdecke 120 des zweiten Gepäckfachs 100 vorbeigeführt wird (Positionen B und C) und zumindest teilweise durch den Gepäckraum 101 des zweiten Gepäckfachs 100 geführt wird (Positionen D und E). Während dieser Bewegung kann die zweite Seite 320 des Deckenpaneels 300 entlang der Vorderkante 131 der Zwischenwand 130 geführt werden. Die Form der Vorderkante 131 der Zwischenwand 130 ist dabei möglichst an die Bewegung (beispielsweise Drehbewegung) des Deckenpaneels 300 angepasst. Beispielsweise begünstigt eine konkave Form der Vorderkante 131 diese Bewegung des Deckenpaneels 300.

Schließlich kann beim weiteren Absenken der zweiten Seite 320 des Deckenpaneels 300 die zweite Seite 320 an einer Vorderkante 151 eines Gepäckfachbodens 150 des zweiten Gepäckfachs 100 vorbeigeführt werden. In diesem Moment befindet sich die erste Seite 310 des Deckenpaneels 300 noch in dem Zwischenraum 20 oberhalb des ersten Gepäckfachs 100 (Position F). Das Vorbeiführen der zweiten Seite 320 des Deckenpaneels 300 an der Vorderkante 151 des Gepäckfachbodens 150 kann ein elastisches Verformen einer Abschlusslippe 311 des Deckenpaneels 300 umfassen. Die Abschlusslippe 311 kann beispielsweise an der zweiten Seite 320 des Deckenpaneels 300 hervorstehend angebracht sein und aus einem elastischen Kunststoff oder Gummi gefertigt sein.

Anschließend lässt sich das Deckenpaneel 300 vollständig entfernen und entnehmen. Nun können Wartungsarbeiten in den Zwischenräumen 10 und 20 sowie im Dachabschnitt 3 des Fahrzeugs 1 durchgeführt werden. An das Deckenpaneel 300 angrenzende weitere Deckenpaneele (in Blickrichtung einer Längsrichtung des Fahrzeugs 1 (X-Achse)) können auf gleiche Weise ausgebaut werden. Hierfür müssen die benachbarten Deckenpaneele 300 aus der jeweiligen Haltevorrichtung 190 gelöst werden und in Längsrichtung des Fahrzeugs 1 (X-Achse) an die Position mit dem Gepäckfach 100 mit entfernter Gepäckfachklappe 110 bewegt werden. Dadurch kann Schritt für Schritt eine Vielzahl von Deckenpaneele 300 ausgebaut werden, wobei nur an einem einzigen Gepäckfach 100 die Gepäckfachklappe 110 entfernt werden muss. Ferner wäre es auch ausreichend, dieses einzige Gepäckfach 100 mit einer Gepäckfachdecke 120, die den zusätzlichen Abstand Δ von der Oberkante 102 des Gepäckraums 101 zur Vorderkante 123 der Gepäckfachdecke 120 ermöglicht, vorzusehen, während alle übrigen Gepäckfächer auf herkömmliche Weise, aber größer, gestaltet sein können.

Der Einbau eines Deckenpaneels 300 erfolgt in umgekehrter Reihenfolge, also von der Position F zur Position A. Anschließend kann eine Gepäckfachklappe 110 an dem ersten Gepäckfach eingesetzt und befestigt werden. Hierbei kann beispielsweise der Schnellverschluss 225 aus Figur 7 verwendet werden.

Mit Bezug auf die Figur 4 ist erkennbar, dass die Seitenwände 140 möglicherweise den Einbau oder Ausbau eines Deckenpaneels 300 behindern können, falls das Deckenpaneel 300 in Längsrichtung des Fahrzeugs 1 (X-Achse) mindestens genauso lang ist, wie das Gepäckfach 100. Zwar könnten in Längsrichtung des Fahrzeugs 1 kürzere Deckenpaneele 300 verwendet werden, jedoch ist zur ansprechenden Optik ein Deckenpaneel 300 mit mindestens der Länge eines Gepäckfachs 100 wünschenswert. Beispielsweise können Fugen zwischen Deckenpaneelen 300 mit Fugen zwischen Gepäckfächern 100 in Längsrichtung des Fahrzeugs 1 zusammenfallen, sodass ein einheitliches Bild entsteht.

Um nun ein (nahezu) gleichlanges Deckenpaneel 300 auszubauen, kann dies in der Position B oder C (Figur 8) um eine vertikale Achse (Z-Achse) gedreht werden. Optional kann das Deckenpaneel 300 auch um die Querachse (Y-Achse) gedreht werden. Nun lässt sich eine Ecke einer Seite 320 des Deckenpaneels 300 in den Gepäckraum 101 neben der Seitenwand 140 führen, während die in Längsrichtung des Fahrzeugs 1 (X-Achse) gegenüberliegende Ecke derselben Seite 320 des Deckenpaneels 300 sich außerhalb des Gepäckraums 101 (im Bereich vor der anderen Seitenwand 140) befindet. In dieser Schrägstellung lässt sich die Abfolge der Bewegung aus Figur 8 ebenfalls durchführen.

In dem Detailausschnitt in Figur 8 ist ebenfalls schematisch angedeutet, dass die Vorderkante 151 des Gepäckfachbodens 150 zurückversetzt ist (in Figur 8 nach rechts zurückversetzt ist). Die schematisch angedeutete, schräg nach links oben verlaufende Begrenzung des Gepäckraums 101 überlappt mit der zweiten Seite 320 des Deckenpaneels 300 in der Position F. Wäre die Vorderkante 151 des Gepäckfachbodens 150 entsprechend den Gepäckraum 101 weiter vorne angeordnet, könnte das Deckenpaneel 300 nicht ausgebaut oder eingebaut werden. Wie in Figur 8 erkennbar ist, befindet sich die Vorderkante 151 des Gepäckfachbodens 150 in einem Abstand zum ersten Endpunkt 11 im ersten Zwischenraum 10, der größer als oder gleich der Breite B1 des Deckenpaneels 300 ist.

Der Einbau oder Ausbau des Deckenpaneels 300 kann auch spiegelverkehrt erfolgen, wobei das Deckenpaneel 300 mit seiner zweiten Seite 320 zu dem zweiten Endpunkt 21 in den zweiten Zwischenraum 20 bewegt wird und anschließend die erste Seite 310 des Deckenpaneels 300 vor dem ersten Gepäckfach 100 (links in Figur 8) abgesenkt wird.

Figur 9 zeigt schematisch eine perspektivische Ansicht eines Lichtspalts 125 in einer Gepäckfachdecke 120 eines Gepäckfachs 100. Beispielsweise kann eine Beleuchtung 40 an oder in einem Deckenpaneel 300 vorgesehen sein. Insbesondere kann es sich um eine herkömmliche Beleuchtung 40 eines herkömmlichen Deckenpaneels 300 handeln. Aufgrund des größeren Gepäckfachs 100 würde die Beleuchtung 40 durch die Gepäckfachdecke 120 des Gepäckfachs 100 verdeckt werden, wodurch die Beleuchtung innerhalb der Passagierkabine verschlechtert würde. Insbesondere bei geöffneter Gepäckfachklappe 110, die bei dem größeren Gepäckfach 100 auch größer ausfällt, würde die herkömmliche Beleuchtung 140 stark verdeckt sein. Die Vorderkante 123 der Gepäckfachdecke 120 kann nun, wie in Figur 9 dargestellt, zumindest in einem Abschnitt 124 zurückspringen und dort von der Oberkante 111 der Gepäckfachklappe 110 mit einem zweiten Abstand beabstandet sein, der größer ist als der erste Abstand Δ. Der hierbei entstehende Lichtspalt 125 ermöglicht eine Beleuchtung der Passagierkabine, da Licht der Beleuchtung 40 durch den Lichtspalt in die Passagierkabine und auch teilweise in den Gepäckraum 101 fallen kann.

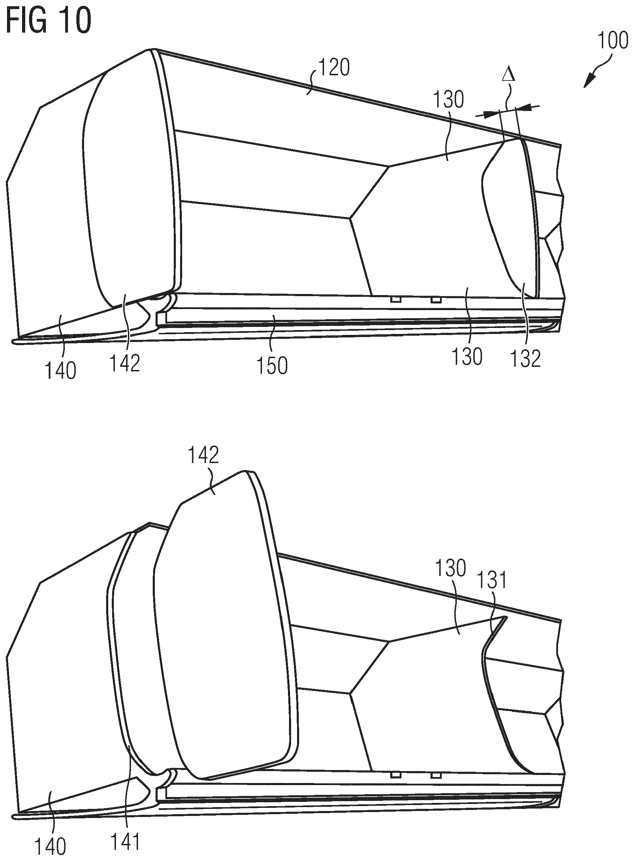

Figur 10 zeigt schematisch perspektivische Ansichten eines Gepäckfachs 100 mit optionalen Varianten der Seitenwand 140 und der Zwischenwand 130. So kann die Zwischenwand 130 aus zwei Abschnitten bestehen, wobei ein der Gepäckfachklappe 110 zugewandter Abschnitt 132 lösbar an dem Gepäckfach 100 befestigt ist. Beispielsweise kann der Abschnitt 132 in die Zwischenwand 130 und/oder in die Gepäckfachdecke 120 und/oder in den Gepäckfachboden 150 eingesteckt werden. Nach dem Entnehmen des Abschnitts 132 ist die (konkave) Vorderkante 131 der Zwischenwand 130 freiliegend, sodass das Deckenpaneel 300 leicht ein- und ausgebaut werden kann. Der Abschnitt 132 verschließt somit die linsenförmige Öffnung zwischen Zwischenwand 130 und Gepäckfachklappe 110, sodass keine Gegenstände hindurchfallen können oder die Gepäckfachklappe 110 blockieren können.

Entsprechend kann auch mindestens eine der Seitenwände 140 eines Gepäckfachs 100 einen entsprechenden der Gepäckfachklappe 110 zugewandten Abschnitt 142 aufweisen, der lösbar an dem Gepäckfach 100 befestigt ist. Auch dieser Abschnitt 142 kann in die Seitenwand 140 und/oder in die Gepäckfachdecke 120 und/oder in den Gepäckfachboden 150 eingesteckt werden und wieder entnommen werden. Dies ermöglicht ein Freilegen einer Vorderkante 141 der Seitenwand 140 mit einer ebenfalls konkaven Form, die beispielsweise der konkaven Form der Vorderkante 131 der Zwischenwand 130 entsprechend kann. Dadurch lassen sich Gepäckfächer 100 so weit reduzieren, dass auch Deckenpaneele 300 eingebaut und ausgebaut werden können, die sich in Längsrichtung des Fahrzeugs 1 (X-Achse) über mehr als ein Gepäckfach 100 erstrecken.

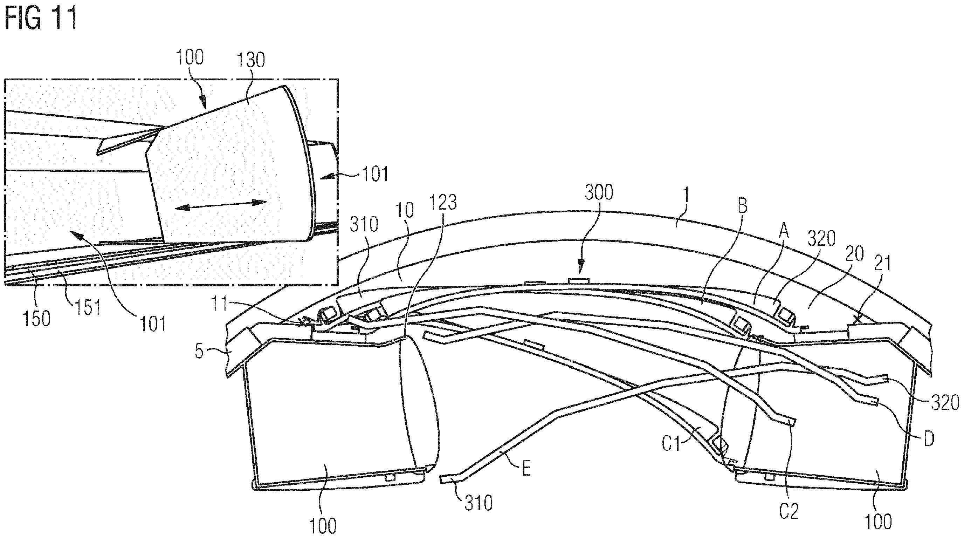

Figur 11 zeigt schematisch eine perspektivische Ansicht eines Gepäckfachs 100 mit ausbaubarer Zwischenwand 130 und einer Abfolge von Positionen beim Einbau oder Ausbau eines Deckenpaneels 300. In dieser optionalen Variante des Gepäckfachs 100 kann die vollständige Seitenwand 130 entnommen werden. Beispielsweise können an der Gepäckfachdecke 120 und dem Gepäckfachboden 150 des Gepäckfachs 100 Schienen oder schienenähnliche Elemente angeordnet sein, in die die Seitenwand 130 eingeschoben und entsprechend herausgenommen werden kann.

Dadurch ist der gesamte Gepäckraum 101 des Gepäckfachs 100 frei und kann zum Einbau und Ausbau eines Deckenpaneels 300 verwendet werden. Beispielsweise kann beim Absenken der zweiten Seite 320 des Deckenpaneels 300 (Position B, wie sie auch in der Figur 8 bereits erläutert wurde) die zweite Seite 320 des Deckenpaneels 300 in den Gepäckraum 101 des zweiten Gepäckfachs 100 (in Figur 11 das rechte Gepäckfach) eingeführt werden. Zum Vergleich ist die Position C1 aus Figur 8 dargestellt und schematisch die Position C2, wie sie in der vorliegenden Variante eingenommen wird. Das Deckenpaneel 300 kann nun weiter in den Gepäckraum 101 des zweiten Gepäckfachs 100 bewegt werden (Position D).

Nun ist die gegenüberliegende erste Seite 310 des Deckenpaneels 300 aus dem ersten Zwischenraum 10 entfernt worden, sodass die erste Seite 310 des Deckenpaneels 300 abgesenkt werden kann und an einer Vorderkante 123 der Gepäckfachdecke 120 des ersten Gepäckfachs 100 vorbeigeführt werden kann. Dabei kann die erste Seite 310 des Deckenpaneels 300 zumindest teilweise durch den Gepäckraum 101 des ersten Gepäckfachs 100 geführt werden, bis die Position E erreicht wird. Anschließend kann die zweite Seite 320 des Deckenpaneels 300 aus dem Gepäckraum 101 des zweiten Gepäckfachs 100 (rechte Seite in Figur 11) herausgeführt werden. Das Deckenpaneel 300 ist nun vollständig entnehmbar.

Ein Einbau des Deckenpaneels 300 erfolgt in umgekehrter Reihenfolge, wobei anschließend die Zwischenwand 130 und die Gepäckfachklappe 110 wieder am Gepäckfach 100 angebracht werden.

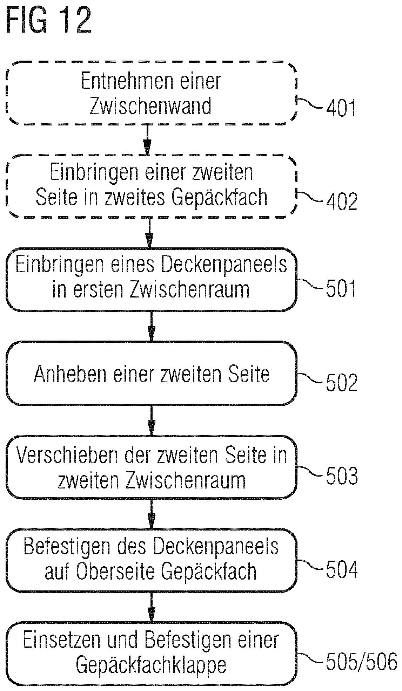

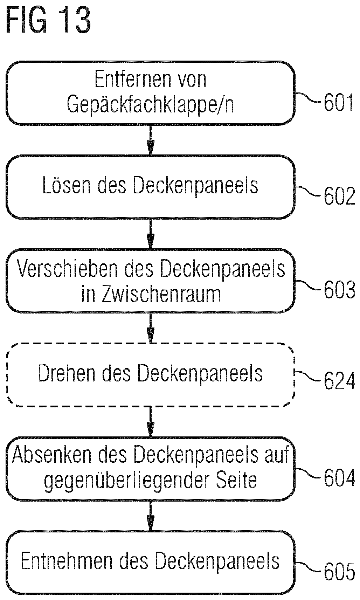

Die Figuren 12 und 13 zeigen Ablaufdiagramme für Verfahren zum Einbau bzw. Ausbau eines Deckenpaneels.

Der Einbau eines Deckenpaneels 300 in einen Fahrzeugbereich 2 zum Teil oberhalb zweier Gepäckfächer 100 umfasst zunächst ein Einbringen 501 einer ersten Seite 310 des Deckenpaneels 300 in einen ersten Zwischenraum 10 zwischen einer Primärstruktur des Fahrzeugs 1 und einem ersten der Gepäckfächer 100 (beispielsweise das linke Gepäckfach in den Figuren 1, 8 und 11. Anschließend kann ein Anheben 502 einer der ersten Seite 310 gegenüberliegenden zweiten Seite 320 des Deckenpaneels 300 erfolgen, wobei die zweite Seite 320 des Deckenpaneels 300 zumindest teilweise durch einen Gepäckraum 101 eines zweiten der Gepäckfächer 100 geführt wird und an einer Vorderkante 123 einer Gepäckfachdecke 120 des zweiten Gepäckfachs 100 vorbeigeführt wird. Danach umfasst das Verfahren ein Verschieben 503 des Deckenpaneels 300 mit seiner zweiten Seite 320 in einen zweiten Zwischenraum 20 zwischen der Primärstruktur des Fahrzeugs 1 und dem zweiten der Gepäckfächer 100. Schließlich kann ein Befestigen 504 der ersten Seite 310 des Deckenpaneels 300 an einer Haltevorrichtung 190 auf einer Oberseite der Gepäckfachdecke 120 des ersten Gepäckfachs 100 und ein Befestigen der zweiten Seite 320 des Deckenpaneels 300 an einer Haltevorrichtung 190 auf einer Oberseite der Gepäckfachdecke 120 des zweiten Gepäckfachs 100 erfolgen.

Optional kann vor dem Einbringen 501 der ersten Seite 310 des Deckenpaneels 300 in einem Schritt 401 eine Zwischenwand 130 aus dem zweiten Gepäckfach 100 entnommen werden. Dies ermöglicht ein ebenfalls optionales Einbringen 402 der zweiten Seite 320 des Deckenpaneels 300 in den Gepäckraum 101 des zweiten Gepäckfachs 100. Eine entsprechende Position des Deckenpaneels 300 ist in Figur 11, Positionen C2, D und E gezeigt.

In entsprechend umgekehrter Reihenfolge kann ein Verfahren zum Ausbau eines Deckenpaneels 300, das oberhalb zweier Gepäckfächer 100 in einem Fahrzeug 1 angeordnet ist, ein Entfernen 601 einer Gepäckfachklappe 110 von mindestens einem der beiden Gepäckfächer 100, ein Lösen 602 je einer Befestigung des Deckenpaneels 300 aus einer jeweiligen Haltevorrichtung 190 auf den beiden Gepäckfächern 100 und ein Verschieben 603 des Deckenpaneels 300, wobei eine erste Seite 310 des Deckenpaneels 300 in einem ersten Zwischenraum 10 zwischen einer Primärstruktur des Fahrzeugs 1 und einem ersten der beiden Gepäckfächer 100 angeordnet ist, umfassen. Optional kann nun das Deckenpaneel gedreht werden (Schritt 624), beispielsweise um eine Vertikale (Z-Achse).

Danach umfasst das Verfahren ein Absenken 604 einer der ersten Seite 310 gegenüberliegenden zweiten Seite 320 des Deckenpaneels 300, wobei die zweite Seite 320 des Deckenpaneels 300 an einer Vorderkante 123 einer Gepäckfachdecke 120 eines zweiten der beiden Gepäckfächer 100 vorbeigeführt wird und zumindest teilweise durch einen Gepäckraum 101 des zweiten Gepäckfachs 100 geführt wird, und ein Entnehmen 605 des Deckenpaneels 300 aus dem ersten Zwischenraum 20.

Die oben beschriebenen Ausführungsbeispiele und Varianten dienen nur der Veranschaulichung der Erfindung. Alle Beispiele, Varianten und einzelne Details können beliebig miteinander kombiniert werden, um bestimmte Ausführungsformen der Erfindung zu bilden.

## Patentansprüche

1. Fahrzeugbereich (2), umfassend:
- einen Dachabschnitt (3) einer Primärstruktur (1) des Fahrzeugs;
- ein erstes Gepäckfach (100), das unterhalb des Dachabschnitts (3) angeordnet ist und einen ersten Zwischenraum (10) zwischen der Primärstruktur (1) und dem ersten Gepäckfach (100) begrenzt;
- ein zweites Gepäckfach (100), das dem ersten Gepäckfach (100) gegenüberliegt, unterhalb des Dachabschnitts (3) angeordnet ist und einen zweiten Zwischenraum (20) zwischen der Primärstruktur (1) und dem zweiten Gepäckfach (100) begrenzt; und
- ein Deckenpaneel (300), das unterhalb des Dachabschnitts (3) angeordnet ist und eine erste Seite (310), die oberhalb des ersten Gepäckfachs in dem ersten Zwischenraum (10) und überlappend mit dem ersten Gepäckfach (100) angeordnet ist, und eine zweite Seite (320), die der ersten Seite (310) gegenüberliegt und oberhalb des zweiten Gepäckfachs (100) angeordnet ist, umfasst,
wobei der erste Zwischenraum (10) einen Endpunkt (11) umfasst, der von dem zweiten Gepäckfach (100) am weitesten beabstandet und an den die erste Seite (310) des Deckenpaneels (300) bewegbar ist,
wobei das zweite Gepäckfach (100) eine Gepäckfachklappe (110) und eine Gepäckfachdecke (120), die einen Teil eines Gepäckraums (101) des Gepäckfachs (100) nach oben hin begrenzt, umfasst,
**dadurch gekennzeichnet, dass**
die Gepäckfachklappe (110) des zweiten Gepäckfachs (100) dazu eingerichtet ist, entfernt zu werden,
die zweite Seite (320) des Deckenpaneels (300) in dem zweiten Zwischenraum (20) und überlappend mit dem zweiten Gepäckfach (100) angeordnet ist,
eine Breite (B1) des Deckenpaneels (300), die sich von der ersten Seite (310) zu der zweiten Seite (320) des Deckenpaneels (300) erstreckt, größer ist als eine Distanz (B2) zwischen dem Endpunkt (11) und einer Oberkante (102) des Gepäckraums (101) des zweiten Gepäckfachs (100), wobei die Oberkante (102) dem Dachabschnitt (3) und dem ersten Gepäckfach (100) zugewandt ist, und
die Gepäckfachdecke (120) so ausgestaltet ist, dass eine dem ersten Gepäckfach (100) zugewandte Vorderkante (123) der Gepäckfachdecke (120) eine Distanz (B3) zu dem Endpunkt (11) aufweist, die größer als oder gleich der Breite (B1) des Deckenpaneels (300) ist, sodass, nach einem Entfernen der Gepäckfachklappe (110) des zweiten Gepäckfachs (100) und Bewegen der ersten Seite (310) des Deckenpaneels (300) an den Endpunkt (11), die zweite Seite (320) des Deckenpaneels (300) durch Senken oder Anheben an der Vorderkante (123) der Gepäckfachdecke (120) des zweiten Gepäckfachs (100) vorbeigeführt wird und zumindest teilweise durch den Gepäckraum (101) des zweiten Gepäckfachs (100) geführt wird.

2. Fahrzeugbereich (2) gemäß Anspruch 1, wobei das zweite Gepäckfach (100) eine Befestigungseinrichtung (200) umfasst, die dazu eingerichtet ist, die Gepäckfachklappe (110) drehbar an dem Gepäckfach (100) zu befestigen,
wobei eine Oberkante (111) der Gepäckfachklappe (110) von einer der Gepäckfachklappe (110) zugewandten Vorderkante (123) der Gepäckfachdecke (120) mit einem ersten Abstand beabstandet ist, und/oder
wobei die Befestigungseinrichtung (200) zwei Abschnitte (210, 220) umfasst, die mit einem Schnellverschluss (225) verbunden sind, und wobei ein Abschnitt (220) der Befestigungseinrichtung (200) vollständig von der Gepäckfachdecke (120) überdeckt ist.

3. Fahrzeugbereich (2) gemäß Anspruch 1 oder 2, wobei das zweite Gepäckfach (100) ferner umfasst:
- eine Zwischenwand (130), die den Gepäckraum (101) unterteilt und zu der Gepäckfachdecke (120) und der Gepäckfachklappe (110) jeweils im Wesentlichen senkrecht angeordnet ist,
wobei die Zwischenwand (130) eine der Gepäckfachklappe (110) zugewandte konkave Vorderkante (131) aufweist, und/oder
wobei die Zwischenwand (130) lösbar an dem Gepäckfach (100) befestigt ist.

4. Fahrzeugbereich (2) gemäß einem der Ansprüche 1 bis 3, wobei das zweite Gepäckfach (100) ferner umfasst:
- eine Seitenwand (140), die den Gepäckraum (101) in Längsrichtung seitlich begrenzt und eine der Gepäckfachklappe (110) zugewandte Vorderkante (141), die eine einem Querschnitt der Gepäckfachklappe (110) entsprechende Form hat, aufweist.

5. Fahrzeugbereich (2) gemäß Anspruch 4, wobei die Seitenwand (140) und/oder die Zwischenwand (130) aus mindestens zwei Abschnitten besteht, wobei mindestens ein der Gepäckfachklappe (110) zugewandter Abschnitt (132, 142) lösbar an dem Gepäckfach (100) befestigt ist.

6. Fahrzeugbereich (2) gemäß einem der Ansprüche 1 bis 5, wobei die Vorderkante (123) der Gepäckfachdecke (120) des zweiten Gepäckfachs (100) in zumindest einem Abschnitt (124) zurückspringt und dort von der Oberkante (111) der Gepäckfachklappe (110) mit einem zweiten Abstand beabstandet ist, wobei der zweite Abstand größer ist als der erste Abstand.

7. Verfahren zum Einbau eines Deckenpaneels (300) eines Fahrzeugbereichs (2) gemäß einem der Ansprüche 1 bis 6 in einem Fahrzeug (1), wobei das Verfahren umfasst:
Einbringen (501) der ersten Seite (310) des Deckenpaneels (300) in den ersten Zwischenraum (10) zwischen der Primärstruktur des Fahrzeugs (1) und dem ersten Gepäckfach (100) bis die erste Seite (310) des Deckenpaneels (300) an dem Endpunkt (11) ist und das erste Gepäckfach (100) überlappt;
Anheben (502) der der ersten Seite (310) gegenüberliegenden zweiten Seite (320) des Deckenpaneels (300), wobei die zweite Seite (320) des Deckenpaneels (300) zumindest teilweise durch den Gepäckraum (101) des zweiten Gepäckfachs (100), von dem die Gepäckfachklappe (110) entfernt wurde, geführt wird und an der Vorderkante (123) der Gepäckfachdecke (120) des zweiten Gepäckfachs (100) vorbeigeführt wird;
Verschieben (503) des Deckenpaneels (300) mit seiner zweiten Seite (320) in den zweiten Zwischenraum (10); und
Befestigen (504) der ersten Seite (310) des Deckenpaneels (300) an einer Haltevorrichtung (190) auf einer Oberseite der Gepäckfachdecke (120) des ersten Gepäckfachs (100) und Befestigen der zweiten Seite (320) des Deckenpaneels (300) an einer Haltevorrichtung (190) auf einer Oberseite der Gepäckfachdecke (120) des zweiten Gepäckfachs (100).

8. Verfahren gemäß Anspruch 7, ferner umfassend:
Einsetzen und Befestigen (505) einer Gepäckfachklappe (110) an dem ersten Gepäckfach (100); und/oder
Einsetzen und Befestigen (506) der Gepäckfachklappe (110) an dem zweiten Gepäckfach (100).

9. Verfahren gemäß Anspruch 7 oder 8, vor dem Einbringen (501) der ersten Seite (310) des Deckenpaneels (300) ferner umfassend:
Entnehmen (401) einer Zwischenwand (130) aus dem zweiten Gepäckfach (100); und
Einbringen (402) der zweiten Seite (320) des Deckenpaneels (300) in den Gepäckraum (101) des zweiten Gepäckfachs (100).

10. Verfahren zum Ausbau eines Deckenpaneels (300) eines Fahrzeugbereichs (2) gemäß einem der Ansprüche 1 bis 6 in einem Fahrzeug (1), wobei das Verfahren umfasst:
Entfernen (601) der Gepäckfachklappe (110) des zweiten Gepäckfachs (100);
Lösen (602) je einer Befestigung des Deckenpaneels (300) aus einer jeweiligen Haltevorrichtung (190) auf dem ersten und zweiten Gepäckfach (100);
Verschieben (603) des Deckenpaneels (300) in Richtung des Endpunkts (11) in dem ersten Zwischenraum (10), wobei die erste Seite (310) des Deckenpaneels (300) in dem ersten Zwischenraum (10) zwischen der Primärstruktur des Fahrzeugs (1) und dem ersten Gepäckfach (100) angeordnet ist;
Absenken (604) der der ersten Seite (310) gegenüberliegenden zweiten Seite (320) des Deckenpaneels (300), wobei die zweite Seite (320) des Deckenpaneels (300) an der Vorderkante (123) der Gepäckfachdecke (120) des zweiten Gepäckfachs (100) vorbeigeführt wird und zumindest teilweise durch den Gepäckraum (101) des zweiten Gepäckfachs (100) geführt wird; und
Entnehmen (605) des Deckenpaneels (300) aus dem ersten Zwischenraum (10).

11. Verfahren gemäß Anspruch 10, wobei das Absenken (604) der zweiten Seite (320) des Deckenpaneels (300) ferner ein Vorbeiführen der zweiten Seite (320) des Deckenpaneels (300) an einer Vorderkante (151) eines Gepäckfachbodens (150) des zweiten Gepäckfachs (100), während sich die erste Seite (310) des Deckenpaneels (300) noch in dem ersten Zwischenraum (20) befindet, umfasst.

12. Verfahren gemäß Anspruch 11, wobei das Vorbeiführen der zweiten Seite (320) des Deckenpaneels (300) an der Vorderkante (151) des Gepäckfachbodens (150) ein elastisches Verformen einer an der zweiten Seite (320) des Deckenpaneels (300) hervorstehenden Abschlusslippe (311) umfasst.

13. Verfahren gemäß einem der Ansprüche 10 bis 12, ferner umfassend:
vor dem Absenken (604) der zweiten Seite (320) des Deckenpaneels (300), Drehen (624) des Deckenpaneels (300), sodass beim Absenken (604) der zweiten Seite (320) des Deckenpaneels (300) eine sich an der zweiten Seite (320) befindliche Ecke des Deckenpaneels (300) durch den Gepäckraum (101) des zweiten Gepäckfachs (100) bewegt.

14. Verfahren gemäß einem der Ansprüche 10 bis 13, wobei das zweite Gepäckfach (100) eine Zwischenwand (130), die den Gepäckraum (101) des zweiten Gepäckfachs (100) unterteilt und eine der Gepäckfachklappe (110) zugewandte Vorderkante (131) hat, aufweist,
wobei das Absenken (604) der zweiten Seite (320) des Deckenpaneels (300) ein Bewegen der zweiten Seite (320) des Deckenpaneels (300) entlang der Vorderkante (131) der Zwischenwand (130) umfasst.

15. Verfahren gemäß einem der Ansprüche 10 bis 13, wobei das zweite Gepäckfach (100) eine Zwischenwand (130), die den Gepäckraum (101) des zweiten Gepäckfachs (100) unterteilt, aufweist, und das Verfahren ferner umfasst:
Entnehmen (650) der Zwischenwand (130) aus dem zweiten Gepäckfach (100);
beim Absenken (604) der zweiten Seite (320) des Deckenpaneels (300), Einführen der zweiten Seite (320) des Deckenpaneels (300) in den Gepäckraum (101) des zweiten Gepäckfachs (100);
Absenken der ersten Seite (310) des Deckenpaneels (300), wobei die erste Seite (310) des Deckenpaneels (300) an einer Vorderkante (123) einer Gepäckfachdecke (120) des ersten Gepäckfachs (100) vorbeigeführt wird und zumindest teilweise durch einen Gepäckraum (101) des ersten Gepäckfachs (100) geführt wird; und
Herausführen der zweiten Seite (320) des Deckenpaneels (300) aus dem Gepäckraum (101) des zweiten Gepäckfachs (100).

## Claims

1. Vehicle region (2) comprising:
- a roof portion (3) of a primary structure (1) of the vehicle;
- a first luggage compartment (100), which is arranged below the roof portion (3) and delimits a first interspace (10) between the primary structure (1) and the first luggage compartment (100);
- a second luggage compartment (100), which is situated opposite the first luggage compartment (100), is arranged below the roof portion (3) and delimits a second interspace (20) between the primary structure (1) and the second luggage compartment (100); and
- a ceiling panel (300), which is arranged below the roof portion (3) and comprises a first side (310), arranged above the first luggage compartment in the first interspace (10) and so as to overlap the first luggage compartment (100), and a second side (320), situated opposite the first side (310) and arranged above the second luggage compartment (100),
wherein the first interspace (10) comprises an end point (11) which is furthest away from the second luggage compartment (100) and to which the first side (310) of the ceiling panel (300) is able to be moved,
wherein the second luggage compartment (100) comprises a luggage-compartment flap (110) and a luggage-compartment top (120) which delimits a part of a luggage space (101) of the luggage compartment (100) towards the top,
**characterized in that**
the luggage-compartment flap (110) of the second luggage compartment (100) is configured to be removed,
the second side (320) of the ceiling panel (300) is arranged in the second interspace (20) and so as to overlap the second luggage compartment (100),
a width (B1) of the ceiling panel (300), extending from the first side (310) to the second side (320) of the ceiling panel (300), is greater than a distance (B2) between the end point (11) and a top edge (102) of the luggage space (101) of the second luggage compartment (100), wherein the top edge (102) is directed towards the roof portion (3) and the first luggage compartment (100), and
the luggage-compartment top (120) is configured in such a way that a front edge (123), directed towards the first luggage compartment (100), of the luggage-compartment top (120) is at a distance (B3) from the end point (11), which distance is greater than or equal to the width (B1) of the ceiling panel (300), such that, after removal of the luggage-compartment flap (110) of the second luggage compartment (100) and movement of the first side (310) of the ceiling panel (300) to the end point (11), the second side (320) of the ceiling panel (300) is, by way of lowering or lifting, guided past the front edge (123) of the luggage-compartment top (120) of the second luggage compartment (100) and is guided at least partially through the luggage space (101) of the second luggage compartment (100).

2. Vehicle region (2) according to Claim 1, wherein the second luggage compartment (100) comprises a fastening device (200) which is configured to fasten the luggage-compartment flap (110) rotatably to the luggage compartment (100),
wherein a top edge (111) of the luggage-compartment flap (110) is spaced apart from a front edge (123), directed towards the luggage-compartment flap (110), of the luggage-compartment top (120) by a first distance, and/or
wherein the fastening device (200) comprises two portions (210, 220) which are connected by way of a quick-action fastener (225), and wherein a portion (220) of the fastening device (200) is covered completely by the luggage-compartment top (120).

3. Vehicle region (2) according to Claim 1 or 2, wherein the second luggage compartment (100) further comprises:
- an intermediate wall (130), which subdivides the luggage space (101) and is arranged substantially perpendicularly to the luggage-compartment top (120) and the luggage-compartment flap (110) in each case,
wherein the intermediate wall (130) has a concave front edge (131) which is directed towards the luggage-compartment flap (110), and/or
wherein the intermediate wall (130) is fastened releasably to the luggage compartment (100).

4. Vehicle region (2) according to one of Claims 1 to 3, wherein the second luggage compartment (100) further comprises:
- a side wall (140), which laterally delimits the luggage space (101) in the longitudinal direction and has a front edge (141) directed towards the luggage-compartment flap (110) and having a shape which corresponds to a cross section of the luggage-compartment flap (110).

5. Vehicle region (2) according to Claim 4, wherein the side wall (140) and/or the intermediate wall (130) consist(s) of at least two portions, wherein at least one portion (132, 142) directed towards the luggage-compartment flap (110) is fastened releasably to the luggage compartment (100).

6. Vehicle region (2) according to one of Claims 1 to 5, wherein the front edge (123) of the luggage-compartment top (120) of the second luggage compartment (100) is set back in at least a portion (124) and, there, is spaced apart from the top edge (111) of the luggage-compartment flap (110) by a second distance, wherein the second distance is greater than the first distance.

7. Method for installing a ceiling panel (300) of a vehicle region (2) according to one of Claims 1 to 6 in a vehicle (1), wherein the method comprises:
introducing (501) the first side (310) of the ceiling panel (300) into the first interspace (10) between the primary structure of the vehicle (1) and the first luggage compartment (100) until the first side (310) of the ceiling panel (300) is at the end point (11) and overlaps the first luggage compartment (100);
lifting (502) the second side (320), situated opposite the first side (310), of the ceiling panel (300), wherein the second side (320) of the ceiling panel (300) is guided at least partially through the luggage space (101) of the second luggage compartment (100), from which the luggage-compartment flap (110) has been removed, and is guided past the front edge (123) of the luggage-compartment top (120) of the second luggage compartment (100);
moving (503) the ceiling panel (300) at its second side (320) into the second interspace (10); and
fastening (504) the first side (310) of the ceiling panel (300) to a holding apparatus (190) on a top side of the luggage-compartment top (120) of the first luggage compartment (100), and fastening the second side (320) of the ceiling panel (300) to a holding apparatus (190) on a top side of the luggage-compartment top (120) of the second luggage compartment (100).

8. Method according to Claim 7, further comprising:
inserting and fastening (505) a luggage-compartment flap (110) at/to the first luggage compartment (100); and/or
inserting and fastening (506) the luggage-compartment flap (110) at/to the second luggage compartment (100).

9. Method according to Claim 7 or 8, further comprising, prior to introducing (501) the first side (310) of the ceiling panel (300):
removing (401) an intermediate wall (130) from the second luggage compartment (100); and
introducing (402) the second side (320) of the ceiling panel (300) into the luggage space (101) of the second luggage compartment (100).

10. Method for dismounting a ceiling panel (300) of a vehicle region (2) according to one of Claims 1 to 6 in a vehicle (1), wherein the method comprises:
removing (601) the luggage-compartment flap (110) of the second luggage compartment (100);
releasing (602) in each case one fastening of the ceiling panel (300) from respective holding apparatuses (190) on the first and second luggage compartments (100);
moving (603) the ceiling panel (300) in the first interspace (10) in the direction of the end point (11), wherein the first side (310) of the ceiling panel (300) is arranged in the first interspace (10) between the primary structure of the vehicle (1) and the first luggage compartment (100);
lowering (604) the second side (320), situated opposite the first side (310), of the ceiling panel (300), wherein the second side (320) of the ceiling panel (300) is guided past the front edge (123) of the luggage-compartment top (120) of the second luggage compartment (100) and is guided at least partially through the luggage space (101) of the second luggage compartment (100); and
removing (605) the ceiling panel (300) from the first interspace (10).

11. Method according to Claim 10, wherein lowering (604) the second side (320) of the ceiling panel (300) further comprises guiding the second side (320) of the ceiling panel (300) past a front edge (151) of a luggage-compartment base (150) of the second luggage compartment (100) while the first side (310) of the ceiling panel (300) is still situated in the first interspace (20).

12. Method according to Claim 11, wherein guiding the second side (320) of the ceiling panel (300) past the front edge (151) of the luggage-compartment base (150) comprises elastically deforming a terminating lip (311) which projects from the second side (320) of the ceiling panel (300).

13. Method according to one of Claims 10 to 12, further comprising:
prior to lowering (604) the second side (320) of the ceiling panel (300), turning (624) the ceiling panel (300) such that, when lowering (604) the second side (320) of the ceiling panel (300), a corner of the ceiling panel (300) situated on the second side (320) moves through the luggage space (101) of the second luggage compartment (100).

14. Method according to one of Claims 10 to 13, wherein the second luggage compartment (100) has an intermediate wall (130), which subdivides the luggage space (101) of the second luggage compartment (100) and has a front edge (131) which is directed towards the luggage-compartment flap (110),
wherein lowering (604) the second side (320) of the ceiling panel (300) comprises moving the second side (320) of the ceiling panel (300) along the front edge (131) of the intermediate wall (130).

15. Method according to one of Claims 10 to 13, wherein the second luggage compartment (100) has an intermediate wall (130), which subdivides the luggage space (101) of the second luggage compartment (100), and the method further comprises:
removing (650) the intermediate wall (130) from the second luggage compartment (100);
when lowering (604) the second side (320) of the ceiling panel (300), introducing the second side (320) of the ceiling panel (300) into the luggage space (101) of the second luggage compartment (100);
lowering the first side (310) of the ceiling panel (300), wherein the first side (310) of the ceiling panel (300) is guided past a front edge (123) of a luggage-compartment top (120) of the first luggage compartment (100) and is guided at least partially through a luggage space (101) of the first luggage compartment (100); and
guiding the second side (320) of the ceiling panel (300) out of the luggage space (101) of the second luggage compartment (100).

## Revendications

1. Zone de véhicule (2), comprenant :
- une section de toit (3) d'une structure primaire (1) du véhicule ;
- un premier compartiment à bagages (100) agencé en dessous de la section de toit (3) et délimitant un premier espace intermédiaire (10) entre la structure primaire (1) et le premier compartiment à bagages (100) ;
- un deuxième compartiment à bagages (100), opposé au premier compartiment à bagages (100), agencé en dessous de la section de toit (3) et délimitant un deuxième espace intermédiaire (20) entre la structure primaire (1) et le deuxième compartiment à bagages (100) ; et
- un panneau de plafond (300) agencé en dessous de la section de toit (3) et comprenant un premier côté (310) agencé au-dessus du premier compartiment à bagages dans le premier espace intermédiaire (10) et en chevauchement avec le premier compartiment à bagages (100), et un deuxième côté (320) opposé au premier côté (310) et agencé au-dessus du deuxième compartiment à bagages (100),
le premier espace intermédiaire (10) comprenant un point d'extrémité (11) qui est le plus éloigné du deuxième compartiment à bagages (100) et vers lequel le premier côté (310) du panneau de plafond (300) peut être déplacé,
le deuxième compartiment à bagages (100) comprenant un volet de compartiment à bagages (110) et un plafond de compartiment à bagages (120) qui délimite vers le haut une partie d'un espace à bagages (101) du compartiment à bagages (100),
**caractérisée en ce que**
le volet de compartiment à bagages (110) du deuxième compartiment à bagages (100) est adapté pour être retiré,
le deuxième côté (320) du panneau de plafond (300) est agencé dans le deuxième espace intermédiaire (20) et en chevauchement avec le deuxième compartiment à bagages (100),
une largeur (B1) du panneau de plafond (300) s'étendant du premier côté (310) au deuxième côté (320) du panneau de plafond (300) est supérieure à une distance (B2) entre le point d'extrémité (11) et un bord supérieur (102) de l'espace à bagages (101) du deuxième compartiment à bagages (100), le bord supérieur (102) étant tourné vers la section de toit (3) et le premier compartiment à bagages (100), et
le plafond de compartiment à bagages (120) est conçu de telle sorte qu'un bord avant (123) du plafond de compartiment à bagages (120) tourné vers le premier compartiment à bagages (100) présente une distance (B3) par rapport au point d'extrémité (11) qui est supérieure ou égale à la largeur (B1) du panneau de plafond (300), de telle sorte qu'après un retrait du volet de compartiment à bagages (110) du deuxième compartiment à bagages (100) et un déplacement du premier côté (310) du panneau de plafond (300) vers le point d'extrémité (11), le deuxième côté (320) du panneau de plafond (300) passe devant le bord avant (123) du plafond de compartiment à bagages (120) du deuxième compartiment à bagages (100) par abaissement ou soulèvement et est guidé au moins partiellement à travers l'espace à bagages (101) du deuxième compartiment à bagages (100).

2. Zone de véhicule (2) selon la revendication 1, dans laquelle le deuxième compartiment à bagages (100) comprend un appareil de fixation (200) adapté pour fixer de manière rotative le volet de compartiment à bagages (110) au compartiment à bagages (100),
un bord supérieur (111) du volet de compartiment à bagages (110) est espacé d'une première distance d'un bord avant (123) du plafond de compartiment à bagages (120) tourné vers le volet de compartiment à bagages (110), et/ou
le dispositif de fixation (200) comprend deux sections (210, 220) qui sont reliées à une fermeture rapide (225), et une section (220) de l'appareil de fixation (200) est entièrement recouverte par le plafond de compartiment à bagages (120).

3. Zone de véhicule (2) selon la revendication 1 ou 2, dans laquelle le deuxième compartiment à bagages (100) comprend en outre :
- une paroi intermédiaire (130) qui divise l'espace à bagages (101) et qui est agencée essentiellement perpendiculairement au plafond de compartiment à bagages (120) et au volet de compartiment à bagages (110), respectivement,
la paroi intermédiaire (130) présentant un bord avant concave (131) tourné vers le volet de compartiment à bagages (110), et/ou
la paroi intermédiaire (130) étant fixée de manière amovible au compartiment à bagages (100).

4. Zone de véhicule (2) selon l'une quelconque des revendications 1 à 3, dans laquelle le deuxième compartiment à bagages (100) comprend en outre :
- une paroi latérale (140) qui délimite latéralement l'espace à bagages (101) dans la direction longitudinale et qui présente un bord avant (141) tourné vers le volet de compartiment à bagages (110), qui a une forme correspondant à une section transversale du volet de compartiment à bagages (110).

5. Zone de véhicule (2) selon la revendication 4, dans laquelle la paroi latérale (140) et/ou la paroi intermédiaire (130) est constituée d'au moins deux sections, au moins une section (132, 142) tournée vers le volet de compartiment à bagages (110) étant fixée de manière amovible au compartiment à bagages (100).

6. Zone de véhicule (2) selon l'une quelconque des revendications 1 à 5, dans laquelle le bord avant (123) du plafond de compartiment à bagages (120) du deuxième compartiment à bagages (100) est en retrait dans au moins une section (124) et y est espacé du bord supérieur (111) du volet de compartiment à bagages (110) d'une deuxième distance, la deuxième distance étant supérieure à la première distance.

7. Procédé de montage d'un panneau de plafond (300) d'une zone de véhicule (2) selon l'une quelconque des revendications 1 à 6 dans un véhicule (1), le procédé comprenant :
l'introduction (501) du premier côté (310) du panneau de plafond (300) dans le premier espace intermédiaire (10) entre la structure primaire du véhicule (1) et le premier compartiment à bagages (100) jusqu'à ce que le premier côté (310) du panneau de plafond (300) soit au point d'extrémité (11) et chevauche le premier compartiment à bagages (100) ;
le soulèvement (502) du deuxième côté (320) du panneau de plafond (300) opposé au premier côté (310), le deuxième côté (320) du panneau de plafond (300) étant guidé au moins partiellement à travers l'espace à bagages (101) du deuxième compartiment à bagages (100) duquel le volet de compartiment à bagages (110) a été retiré, et passant devant le bord avant (123) du plafond de compartiment à bagages (120) du deuxième compartiment à bagages (100) ;
le déplacement (503) du panneau de plafond (300) avec son deuxième côté (320) dans le deuxième espace intermédiaire (10) ; et
la fixation (504) du premier côté (310) du panneau de plafond (300) à un dispositif de retenue (190) sur un côté supérieur du plafond de compartiment à bagages (120) du premier compartiment à bagages (100) et la fixation du deuxième côté (320) du panneau de plafond (300) à un dispositif de retenue (190) sur un côté supérieur du plafond de compartiment à bagages (120) du deuxième compartiment à bagages (100).

8. Procédé selon la revendication 7, comprenant en outre :
l'insertion et la fixation (505) d'un volet de compartiment à bagages (110) sur le premier compartiment à bagages (100) ; et/ou
l'insertion et la fixation (506) du volet de compartiment à bagages (110) sur le deuxième compartiment à bagages (100).

9. Procédé selon la revendication 7 ou 8, comprenant en outre, avant l'introduction (501) du premier côté (310) du panneau de plafond (300) :
l'enlèvement (401) d'une paroi intermédiaire (130) du deuxième compartiment à bagages (100) ; et
l'introduction (402) du deuxième côté (320) du panneau de plafond (300) dans l'espace à bagages (101) du deuxième compartiment à bagages (100).

10. Procédé de démontage d'un panneau de plafond (300) d'une zone de véhicule (2) selon l'une quelconque des revendications 1 à 6 dans un véhicule (1), le procédé comprenant :
le retrait (601) du volet de compartiment à bagages (110) du deuxième compartiment à bagages (100) ;
le dégagement (602) de chaque fixation du panneau de plafond (300) d'un dispositif de retenue respectif (190) sur les premier et deuxième compartiments à bagages (100) ;
le déplacement (603) du panneau de plafond (300) en direction du point d'extrémité (11) dans le premier espace intermédiaire (10), le premier côté (310) du panneau de plafond (300) étant agencé dans le premier espace intermédiaire (10) entre la structure primaire du véhicule (1) et le premier compartiment à bagages (100) ;
l'abaissement (604) du deuxième côté (320) du panneau de plafond (300) opposé au premier côté (310), le deuxième côté (320) du panneau de plafond (300) passant devant le bord avant (123) du plafond de compartiment à bagages (120) du deuxième compartiment à bagages (100) et étant guidé au moins partiellement à travers l'espace à bagages (101) du deuxième compartiment à bagages (100) ; et
l'enlèvement (605) du panneau de plafond (300) du premier espace intermédiaire (10).

11. Procédé selon la revendication 10, dans lequel l'abaissement (604) du deuxième côté (320) du panneau de plafond (300) comprend en outre un passage du deuxième côté (320) du panneau de plafond (300) devant un bord avant (151) d'un fond de compartiment à bagages (150) du deuxième compartiment à bagages (100) alors que le premier côté (310) du panneau de plafond (300) se trouve encore dans le premier espace intermédiaire (20).

12. Procédé selon la revendication 11, dans lequel le passage du deuxième côté (320) du panneau de plafond (300) devant le bord avant (151) du fond de compartiment à bagages (150) comprend une déformation élastique d'une lèvre de fermeture (311) faisant saillie sur le deuxième côté (320) du panneau de plafond (300).

13. Procédé selon l'une quelconque des revendications 10 à 12, comprenant en outre :
avant l'abaissement (604) du deuxième côté (320) du panneau de plafond (300), la rotation (624) du panneau de plafond (300) de telle sorte que, lors de l'abaissement (604) du deuxième côté (320) du panneau de plafond (300), un coin du panneau de plafond (300) se trouvant sur le deuxième côté (320) se déplace à travers l'espace à bagages (101) du deuxième compartiment à bagages (100).

14. Procédé selon l'une quelconque des revendications 10 à 13, dans lequel le deuxième compartiment à bagages (100) présente une paroi intermédiaire (130) qui divise l'espace à bagages (101) du deuxième compartiment à bagages (100) et qui a un bord avant (131) tourné vers le volet de compartiment à bagages (110),
l'abaissement (604) du deuxième côté (320) du panneau de plafond (300) comprenant un déplacement du deuxième côté (320) du panneau de plafond (300) le long du bord avant (131) de la paroi intermédiaire (130).

15. Procédé selon l'une quelconque des revendications 10 à 13, dans lequel le deuxième compartiment à bagages (100) présente une paroi intermédiaire (130) divisant l'espace à bagages (101) du deuxième compartiment à bagages (100), et le procédé comprend en outre :
l'enlèvement (650) de la paroi intermédiaire (130) du deuxième compartiment à bagages (100) ;
lors de l'abaissement (604) du deuxième côté (320) du panneau de plafond (300), l'insertion du deuxième côté (320) du panneau de plafond (300) dans l'espace à bagages (101) du deuxième compartiment à bagages (100) ;
l'abaissement du premier côté (310) du panneau de plafond (300), le premier côté (310) du panneau de plafond (300) passant devant un bord avant (123) d'un plafond de compartiment à bagages (120) du premier compartiment à bagages (100) et étant guidé au moins partiellement à travers un espace à bagages (101) du premier compartiment à bagages (100) ; et
la sortie du deuxième côté (320) du panneau de plafond (300) de l'espace à bagages (101) du deuxième compartiment à bagages (100).
